# EUROPEAN PATENT SPECIFICATION

(11) **EP 2 103 791 B1**
(45) Date of publication and mention of the grant of the patent: **30.05.2012**
(21) Application number: 09003771.4
(22) Date of filing: 16.03.2009
(51) Int. Cl.: F02B 77/13, B60R 13/08

(54) **Soundproofing device, foam moulding method for producing soundproofing cover therefor, and foam moulding die for producing soundproofing cover therefor**
Schallschutzvorrichtung, Formschäumverfahren zum Herstellen einer Schallschutzabdeckung für diese, und Schaumformgebungsvorrichtung zum Herstellen der Schallschutzabdeckung für diese
Dispositif d'insonorisation, procédé de moulage de mousse pour produire le capot d'insonorisation pour ledit dispositif, et filière de moulage de mousse pour produire le capot d'insonorisation pour ledit dispositif

(30) Priority: 17.03.2008 JP 2008067593; 30.05.2008 JP 2008142976
(43) Date of publication of application: 23.09.2009
(73) Proprietor: TOKAI RUBBER INDUSTRIES, LTD., Komaki-shi, Aichi-ken, 485-8550 (JP)
(72) Inventor: Yoshida, Shinji, Komaki-shi Aichi-ken 485-8550 (JP); Itoh, Michio, Komaki-shi Aichi-ken 485-8550 (JP); Yamanaka, Shigeki, Kani County Gifu.Pre, 505-0116 (JP)
(74) Representative: Kuhnen & Wacker

(56) References cited:
- EP-A1- 1 363 032
- EP-A2- 0 048 494
- EP-A2- 0 167 967
- DE-U1-202005 004 259
- JP-A- 8 296 452

## Description

### BACKGROUND OF THE INVENTION

### 1. Field of the Invention

The present invention relates to a soundproofing device disposed in a cylinder block of an engine or the like so as to suppress noise, a foam moulding method for producing a soundproofing cover for the soundproofing device, and a foam moulding die for producing the soundproofing cover for the soundproofing device.

### 2. Description of the Related Art

Japanese Patent Application Publication No. JP-A-8-296452 discloses a soundproofing device that covers a cover case for gears of an engine. The soundproofing device is mounted on the surface of the cover case with bolts. More specifically, bosses are formed on the surface of the cover case. A fixed recessed portion is provided on the top surface of each boss. On the other hand, a through hole corresponding to the fixed recessed portion is drilled in the soundproofing device. A bolt is inserted from outside the soundproofing device into the through hole, and fixed in the fixed recessed portion on the boss. Thus, the soundproofing device is mounted on the surface of the cover case by fixing the bolt on the boss.

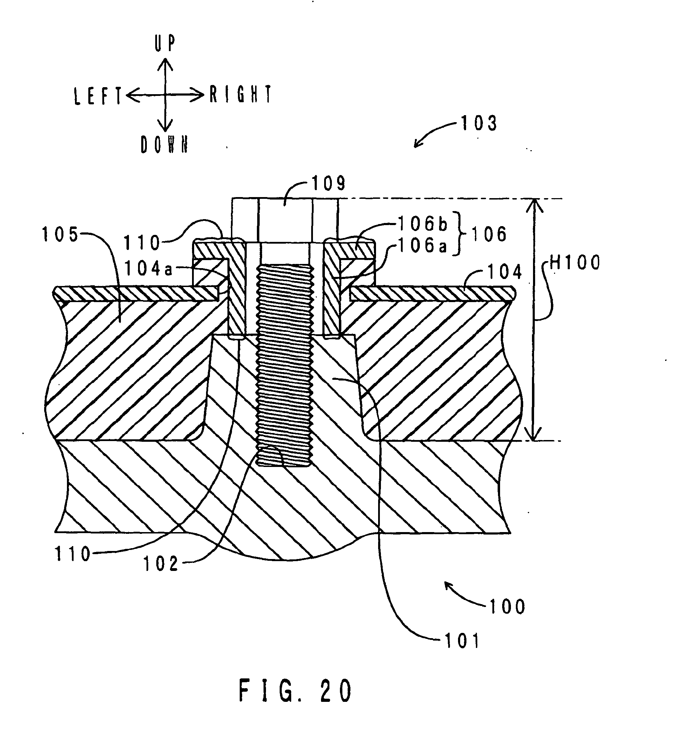

Japanese Patent Application Publication No. JP-A-2002-028934 discloses a soundproofing device with T-shaped collars. FIG 20 is a sectional view taken in the axial direction to show a portion in which a bolt is disposed in the soundproofing device disclosed therein. In FIG 20, the soundproofing device disclosed therein is mounted on the engine surface using bosses on the engine, in a similar manner to the soundproofing device disclosed in Japanese Patent Application Publication No. JP-A-8-296452.

As shown in FIG 20, the soundproofing device 103 includes a cover body 104, a sound absorbing member 105, a T-shaped collar 106 and a bolt 109. Through holes 104a penetrating in the up-down direction are drilled in the cover body 104.

Each T-shaped collar 106 includes a barrel 106a and a flange 106b. The barrel 106a has a cylindrical shape, and is inserted into the through hole 104a. The flange 106b is disposed at the upper end of the barrel 106a and is disposed above the through hole 104a.

The sound absorbing member 105 is made of polyurethane foam and deposited on the lower surface of the cover body 104. The sound absorbing member 105 extends in a gap between the inner circumferential surface of the through hole 104a and the outer circumferential surface of the barrel 106a and in a gap between the upper surface of the cover body 104 and the lower surface of the flange 106b.

The sound absorbing member 105 with which the gaps are filled completely blocks contact between the rigid cover body 104 and the T-shaped collar 106. More specifically, the cover body 104 is floating above a boss 101 (described later) with the flexible sound absorbing member 105 therebetween. Such a structure is hereinafter called a "floating structure."

The soundproofing device 103 (excluding the bolts 109) is integrated in foam moulding of the sound absorbing member 105. To be specific, the cover body 104 and the T-shaped collar 106 are disposed in a cavity before a material of the sound absorbing member 105 flows into dies. By foam moulding the sound absorbing member 105 in this state, the cover body 104, the sound absorbing member 105 and the T-shaped collar 106 are integrated. On the other hand, the boss 101 is provided to protrude from the surface of an engine 100. A fixed recessed portion 102 is provided on the top surface of the boss 101.

When the soundproofing device 103 is mounted on the surface of the engine 100, the T-shaped collar 106 is placed on the top surface of the boss 101, first. At this moment, the fixed recessed portion 102 is disposed radially inside the T-shaped collar 106. Next, the bolt 109 is inserted from above into the T-shaped collar 106. Lastly, the lower end of the bolt 109 is fixed in the fixed recessed portion 102.

A method for moulding an instrument panel including a core, a surface skin and foam is disclosed as a method for moulding a foam moulded article in Japanese Patent Application Publication No. JP-A-8-183042. The instrument panel disclosed therein is produced by firstly laying on moulding surfaces of dies a core and a surface skin such that they face one another, then injecting a liquid foamed resin material into a cavity (more specifically, into spaces between the core and the surface skin), and lastly curing the foamed resin material. A method for moulding a polyurethane article including a core, a surface skin and polyurethane foam is disclosed in Japanese Patent Application Publication No. JP-A-60-049905 in a similar manner to Japanese Patent Application Publication No. JP-A-8-183042.

When the soundproofing device 103 disclosed in Japanese Patent Application Publication No. JP-A-2002-028934 is mounted using the boss 101 of the engine 100, however, a protrusion H100 of the bolt 109 from the surface of the engine 100 is large. In other words, the bolt 109 must protrude by the length of the barrel 106a of the T-shaped collar 106. When the engine 100 is installed in an engine compartment, therefore, the significantly protruding bolt 109 may interfere with the installation.

The soundproofing device 103 is integrated in foam moulding of the sound absorbing member 105. Part of the material of the sound absorbing member 105, therefore, may extend around the top surface of the flange 106b of the T-shaped collar 106 or the lower surface of the barrel 106a thereof in foam moulding. Under this condition, a thin burr 110 may be formed on the top surface of the flange 106b or the lower surface of the barrel 106a.

When the burr 110 is formed, it is caught between the lower surface of the head of the bolt 109 and the top surface of the flange 106b or the lower surface of the barrel 106a and the top surface of the boss 101. The bolt 109, therefore, is difficult to tighten into the fixed recessed portion 102. Also, even after being tightened, the bolt 109 tends to be loosened by the thin burr 110, and thus, the bolt 109 may easily fall out of the fixed recessed portion 102. To suppress the deficiency caused by the burr 110, the burr 110 should be completely removed from the top surface of the flange 106b after foam moulding. However, such operation is complicated.

To drastically resolve the deficiency caused by the burr 110, the burr 110 itself should not be formed. To avoid the formation of the burr 110, the cover body 104 and the sound absorbing member 105 may be integrated by foam moulding, and the T-shaped collar 106 is inserted into the through hole 104a thereafter.

In this case, however, the T-shaped collar 106 is not bonded to the sound absorbing member 105. The T-shaped collar 106 is not caught and fixed between the lower surface of the head of the bolt 109 and the top surface of the boss 101 until the bolt 109 is tightened into the fixed recessed portion 102. In other words, the T-shaped collar 106 is attachable to and detachable from the through hole 104a before the soundproofing device 103 is mounted on the engine 100. The T-shaped collar 106, therefore, tends to fall out of the through hole 104a due to vibrations during transportation of the soundproofing device 103 or the like. To prevent the T-shaped collar 106 from falling out, every T-shaped collar 106 should be attached to the soundproofing member 105. However, such operation is complicated. As described above, various deficiencies caused by the T-shaped collar that is necessary to ensure a floating structure arise in the soundproofing device 103 of the related art.

### SUMMARY OF THE INVENTION

In view of the problems described above, a soundproofing device, a foam moulding method and a foam moulding die according to the present invention have been devised. It is an object of the present invention to provide a soundproofing device that is capable of securing a floating structure, does not need T-shaped collars, and has small protrusions from sound source members, and to provide a foam moulding method for producing a soundproofing cover for the soundproofing device, and to provide a foam moulding die for producing the soundproofing cover for the soundproofing device.

(1) To solve the problems described above, a soundproofing device according to a first aspect of the present invention is disposed on a surface of a sound source member from which a boss having a fixed recessed portion on a top surface thereof is provided so as to protrude and includes: a soundproofing cover that has a cover body including a through hole penetrating in a front-rear direction and disposed radially outside the fixed recessed portion when seen in an axial direction with the centre of the fixed recessed portion considered as an axis, and a sound absorbing member extending at least between a rear surface of the cover body and a front surface of the sound source member; and a fixing member that is fixed in the fixed recessed portion for mounting the soundproofing cover on the sound source member. The soundproofing device is characterized in that it further includes a ring member which comes into contact with a top surface of the boss and extends radially outside the through hole; in that at least part of the boss is inserted into the through hole; and in that the sound absorbing member extends from the rear surface of the cover body through the through hole to the front surface of the cover body and, seen in the axial direction, includes a radial direction floating portion extending between an inner circumferential surface of the through hole and an outer circumferential surface of the boss and an axial direction floating portion extending between an area surrounding the through hole in the front surface of the cover body and a rear surface of the ring member.

The fixed recessed portion may be in the shape of a hole. In other words, the fixed recessed portion may penetrate the sound source member when the thickness of the sound source member is small. The soundproofing device according to the present invention ensures a floating structure using the boss on the sound source member. With the soundproofing device according to the present invention, at least part of the boss is inserted into the through hole. The gaps in the axial direction as shown in FIG 20, therefore, are not generated between the boss and the through hole. Seen in the axial direction, the radial direction floating portion is disposed between the through hole and the boss. The ring member is disposed on the top surface of the boss. The axial direction floating portion is disposed between the ring member and the area surrounding the through hole in the surface of the cover body.

The soundproofing device according to the present invention ensures a floating structure using the boss on the sound source member without a T-shaped collar disposed. Since the T-shaped collar is unnecessary, it is possible to reduce a protrusion from the sound source member.

(2) According to a second aspect of the present invention, in the above configuration (1), it is preferable that the top surface of the boss be surrounded from outside in the radial direction with a chamfered portion in which the sound absorbing member is not disposed. In the present configuration, the sound absorbing member is not easily caught between the ring member and the boss or between the fixing member and the fixed recessed portion when the fixing member is fixed in the fixed recessed portion on the top surface of the boss. Therefore, it is easy to fix the fixing member into the fixed recessed portion. Also, the fixing member does not easily fall out of the fixed recessed portion after being fixed.

(3) According to a third aspect of the present invention, in the above configuration (1) or (2), it is preferable that the cover body have a mounting recessed portion recessed in the rear surface thereof and that the through hole be disposed in a bottom wall of the mounting recessed portion. In the present configuration, it is possible to further reduce the protrusion from the sound source member by the length of recess of the mounting recessed portion. It is also possible to attain high sound absorbing performance by ensuring the thickness of the sound absorbing member disposed in portions except the mounting recessed portion on the cover body.

(4) According to a fourth aspect of the present invention, in any one of the above configurations (1) to (3), it is preferable that the fixing member be a bolt that is inserted into the fixed recessed portion and that the ring member be a washer that is provided around the bolt and caught between a rear surface of a head of the bolt and the top surface of the boss.

In the present configuration, the inside of the washer in the radial direction is caught between the head of the bolt and the top surface of the boss. The tightening force of the bolt against the fixed recessed portion is transmitted through the washer to the axial direction floating portion. It is, therefore, possible to hold down the axial direction floating portion indirectly with the tightening force of the bolt.

(5) According to a fifth aspect of the present invention, in any one of the above configurations (1) to (4), the fixing member and the ring member are integrated. The present configuration can reduce the number of components.

(6) According to a sixth aspect of the present invention, in any one of the above configurations (1) to (5), it is preferable that the soundproofing cover be a foam moulded article including an annular groove, and a functional surface which is disposed inside the annular groove and comes into contact with the rear surface of the ring member and in which generation of a underfilled portion is suppressed in comparison with an area outside the annular groove.

The annular groove is a trace of an annular gas flow control rib used in foam moulding. The gas flow control rib is disposed on moulding surfaces of foam moulding dies for the soundproofing cover. The gas flow control rib prevents gas from flowing inside from outside of the gas flow control rib in foam moulding. Therefore, the underfilled portion does not tend to be generated inside the annular groove, that is, on the functional surface in the present configuration. The functional surface is surrounded with the annular groove. It is, therefore, easy for an operator to identify the functional surface by using the annular groove as a marker. As a result, it is easy for the operator to check whether a underfilled portion is formed on the functional surface.

In the above configuration (6), it is preferable that the soundproofing cover be mounted on the sound source member with the functional surface pressed from its surface side.

The functional surface is pressed by the ring member from its front surface side. On the other hand, the rear surface of the sound absorbing member is in elastic contact with the sound source member. The sound absorbing member is thus pressed by the ring member from its front surface side and by the sound source member from its rear surface side, which ensures the floating structure of the soundproofing cover. To suppress backlash of the soundproofing cover, the functional surface must have secure surface contact with the pressing members and a high surface accuracy.

In the present configuration, it is possible to prevent the generation of a underfilled portion on the functional surface. In other words, it is possible to improve the surface accuracy of the functional surface. The higher the surface accuracy of the functional surface, the more secure the contact between the functional surface and the ring member. Therefore, backlash of the soundproofing cover can be reduced.

(7) To solve the problems described above, according to a seventh aspect of the present invention, a foam moulding method for producing a soundproofing cover for the soundproofing device according to any one of the above configurations (1) to (6) by foaming a foamed resin material in a cavity of a foam moulding die is characterized in that: the soundproofing cover includes a functional surface which comes into contact with the rear surface of the ring member; the cavity has a functional surface moulding portion for moulding the functional surface, and a gas accumulation portion into which gas in the cavity is forced by a flow of the foamed resin material; a gas flow control bump is disposed on a moulding surface defining the cavity in the foam moulding die to separate the functional surface moulding portion and the gas accumulation portion; and the gas flow control bump prevents the gas forced into the gas accumulation portion from flowing over the gas flow control bump into the functional surface moulding portion.

The functional surface is required to have a predetermined surface accuracy. The surface accuracy referred to herein is transferability and reproducibility of the functional surface with respect to the moulding surface of the foam moulding die. In other words, the surface accuracy is high when the functional surface faithfully reproduces the moulding surface. On the other hand, when the functional surface has a shape that is not included in the moulding surface (a shape that is not essentially desired), the surface accuracy is low.

"Flowing over the gas flow control bump" includes situations, such as flowing above the gas flow control bump, flowing downwards around the gas flow control bump, and flowing over the gas flow control bump laterally. In other words, the direction in which to flow over the gas flow control bump is not specifically limited.

Japanese Patent Application Publications No. JP-A-8-183042 and No. JP-A-60-049905 referred to above disclose a moulding method for spreading a foamed resin material throughout a cavity by having the foamed resin material flow along ribs disposed on a core in its extending direction. By the moulding method disclosed therein, it is possible to prevent generation of underfilled portions (recessed portions) at the ends of the cavity or the foamed moulded article that has been moulded.

Two factors for the generation of underfilled portions include: A) the foamed resin material that does not spread throughout the cavity; and B) an in the cavity that is forced into particular places (e.g., corners, sack-like portions) by the flow of the foamed resin material.

By the moulding method disclosed in Japanese Patent Application Publications No. JP-A-8-183042 and No. JP-A-60-049905, it is possible to prevent the generation of underfilled portions for the above factor A; however, it is difficult to prevent the generation of underfilled portions for the above factor B. External air is confined in the cavity when clamping dies in foam moulding. Air is also generated from the foamed resin material flowing in the cavity. The air flows with the flow of the foamed resin material in the cavity. Then, the air is forced into particular places in the cavity.

When ribs are disposed on the core as by the moulding method disclosed in Japanese Patent Application Publications No. JP-A-8-183042 and No. JP-A-60-049905, only the fluidity of the foamed resin material is improved. In other words, the fluidity of the air is improved. Therefore, the air is forced into particular places in the cavity. As a result, underfilled portions are generated on a foam moulded article.

When underfilled portions are generated on a functional surface of a foam moulded article, recessed portions that are not included in the moulding surface are generated on the functional surface. There are possibilities, therefore, that the functional surface cannot ensure a predetermined surface accuracy. As a result, there are possibilities that a foam moulded article cannot fully demonstrate a predetermined performance.

Gas, such as air, is forced into a gas accumulation portion by a flow of the foamed resin material. The gas accumulation portion is formed in a portion of the cavity, such as a corner, a sack-like portion, a recess and other portions that are last filled with the foamed resin material.

By the foam moulding method according to the present invention, gas flow control bumps extend between the gas accumulation portion in which gas especially tends to be accumulated, and the functional surface moulding portion in the cavity. In other words, gas flow control bumps are disposed in flow routes through which gas is most likely to flow into the functional surface moulding portion.

Accordingly, even though gas that has been forced into the gas accumulation portion is about to flow into the functional surface moulding portion, the gas cannot reach the functional surface moulding portion without flowing over the gas flow control bump. Alternatively, even though gas accumulated in the gas accumulation portion gains enough volume to swell out into the functional surface moulding portion, the gas cannot reach the functional surface moulding portion without flowing over the gas flow control bump. Therefore, gas does not tend to flow into the functional surface moulding portion. As a result, it is possible to prevent generation of underfilled portions (recessed portions) on the functional surface of the soundproofing cover by the foam moulding method according to the present invention.

In the above configuration (7), it is preferable that the height of the gas flow control bump be set to 0.3 mm or higher and 1.0 mm or lower. The reason why the height of the gas flow control bump is set to 0.3 mm or higher is that if it is lower than 0.3 mm, gas easily flows over the gas flow control bump. The reason why the height of the gas flow control bump is set to 1.0 mm or lower is that if it is higher than 1.0 mm, the flow of the foam resin material may be interrupted by the gas flow control bump.

In the above configuration (7), it is preferable that the gas flow control bump be a gas flow control rib. In the soundproofing cover that has been produced, the trace of the gas flow control rib is in the shape of a groove. When gas flow control ribs are disposed as gas flow control bumps, it is easy to control gas flows without significantly changing the shape of the sound absorbing member. It is also possible to form gas flow control ribs in the foam moulding die by applying grooving only to necessary portions of a master mould that has the same shape as the soundproofing cover (a mould used as an original to produce the foam moulding die). Therefore, it is possible produce the air flow control rib at a low cost.

In the above configuration (7), it is preferable that the gas flow control bump extend in an annular shape surrounding the functional surface moulding portion. In the present configuration, the functional surface moulding portion is surrounded with the gas flow control bump. Therefore, gas can be prevented from flowing into the functional surface moulding portion from the gas accumulation portion over the entire periphery of the functional surface moulding portion.

In the above configuration (7), it is preferable that the moulding surface include an upper bottom surface that is exposed downwards to the cavity, that the functional surface moulding portion and the gas accumulation portion be disposed along the upper bottom surface and aligned substantially in a horizontal direction, and that the gas flow control bump protrude downwards from the upper bottom surface.

Gas has a lower specific gravity compared to the foamed resin material. Due to this, gas tends to move upwards in the cavity. In the present configuration, the gas flow control bump protrudes downwards. To flow from the gas accumulation portion into the functional surface moulding portion, gas must resist its buoyancy and flow downwards around the gas flow control bump. In the present configuration, therefore, it is possible to prevent gas from flowing into the functional surface moulding portion in a more reliable manner.

In foam moulding, gas continuously flows into the gas accumulation portion. Therefore, the volume of the gas staying in the gas accumulation portion gradually increases, causing the gas to project from the gas accumulation portion laterally and approach the functional surface moulding portion. Even under this condition, it is difficult for the gas to flow downwards around the gas flow control bump. As a result, the gas avoids the functional surface moulding portion to stay along the direction in which the gas flow control bump extends. In the present configuration, it is possible to prevent gas from flowing into the functional surface moulding portion in a more reliable manner.

In the above configuration (7), it is preferable that the gas accumulation portion be disposed in a corner that constitutes boundaries between two or more surfaces of the moulding surfaces.

The gas that has flowed into the corner in the cavity is pressed against the corner by the flow pressure or inflation pressure of the foamed resin material that is exerted from outside the corner. Therefore, the gas that has once flowed into the corner does not easily escape therefrom. In other words, the gas tends to be forced into the corner, which makes it easy to form the gas accumulation portion in the corner. In the present configuration, it is possible to prevent the gas from flowing into the functional surface moulding portion from the gas accumulation portion that is the corner in which gas tends to stay.

In the above configuration (7), it is preferable that the gas accumulation be disposed at a confluence of a plurality of foamed resin material flows.

At a confluence of foamed resin material flows (e.g., downstream of a portion in which a bump facing towards the cavity is disposed on the moulding surface), turbulence tends to occur due to collisions of flows. It is, therefore, easy to force gas into one place. Thus, a gas accumulation portion tends to be formed at a confluence of foamed resin material flows. In the present configuration, it is possible to present gas from flowing into a functional surface moulding portion from a gas accumulation portion that is formed at a confluence of foamed resin material flows.

In the above configuration (7), it is preferable that a configuration be provided in which: the cover body is disposed in the cavity in foam moulding; the sound absorbing member is made of resin foam that is integrated with the cover body in foam moulding; floating bosses each including the radial direction floating portion and the axial direction floating portion are moulded in the cavity having the boss moulding portion each of which is in a recessed shape and has the gas accumulation portion disposed on the rim thereof and the functional surface moulding portion each disposed radially inside the gas accumulation portion; the gas flow control bump is disposed radially inside the gas accumulation portion and radially outside the functional surface moulding portion; the foamed resin material flows from the rear surface of the cover body to the front surface thereof through the through holes so as to flow into the boss moulding portion and flow from inside to outside in the radial direction in the boss moulding portion; the gas is forced into the gas accumulation portion by a flow of the foamed resin material; and the gas flow control bump prevents the gas that has been forced into the gas accumulation portion from flowing over the gas flow control bump into the functional surface moulding portion.

In the present configuration, the gas flow control bump is disposed radially inside the gas accumulation portion and radially outside the functional surface moulding portion. In the present configuration, therefore, it is possible to prevent gas from flowing into the functional surface moulding portion. As a result, it is possible to prevent generation of underfilled portions on the functional surface. In other words, it is possible to improve the surface accuracy of the functional surface. The higher the surface accuracy of the functional surface, the more secure the contact between the functional surface and the ring member. Thus, backlash of the soundproofing cover can be reduced.

(8) To solve the problems described above, according to an eighth aspect of the present invention, a foam moulding die for producing a soundproofing cover for the soundproofing device according to any one of the above configurations (1) to (6) by foaming a foamed resin material in a cavity defined by a moulding surface is characterized in that: the soundproofing cover includes a functional surface which comes into contact with the rear surface of the ring member; the cavity has a functional surface moulding portion for moulding the functional surface and a gas accumulation portion into which gas in the cavity is forced by a flow of the foamed resin material; a gas flow control bump is disposed on the moulding surface to separate the functional surface moulding portion and the gas accumulation portion; and the gas flow control bump prevents the gas forced into the gas accumulation portion from flowing over the gas flow control bump into the functional surface moulding portion.

The functional surface is required to have a predetermined surface accuracy. The surface accuracy referred to herein is transferability and reproducibility of the functional surface with respect to the moulding surface of the foam moulding die. In other words, the surface accuracy is high when the functional surface faithfully reproduces the moulding surface. On the other hand, when the functional surface has a shape that is not included in the moulding surface (a shape that is not essentially desired), the surface accuracy is low.

"Flowing over the gas flow control bump" includes situations, such as flowing above the gas flow control bump, flowing downwards around the gas flow control bump, and flowing over the gas flow control bump laterally. In other words, the direction in which to flow over the gas flow control bump is not specifically limited.

Gas is forced into a gas accumulation portion by a flow of the foamed resin material. The gas accumulation portion is formed in a portion of the cavity, such as a corner, a sack-like portion, a recess and other portions that are last filled with the foamed resin material.

By the foam moulding die according to the present invention, gas flow control bumps extend between the gas accumulation portion in which gas especially tends to be accumulated, and the functional surface moulding portion in the cavity. In other words, gas flow control bumps are disposed in flow routes through which gas is most likely to flow into the functional surface moulding portion.

Even though gas that has been forced into the gas accumulation portion is about to flow into the functional surface moulding portion, or gas accumulated in the gas accumulation portion gains enough volume to swell out into the functional surface moulding portion, the gas cannot reach the functional surface moulding portion without flowing over the gas flow control bump. Therefore, gas does not tend to flow into the functional surface moulding portion. As a result, it is possible to prevent generation of underfilled portions (recessed portions) on the functional surface of the soundproofing cover using the foam moulding die according to the present invention.

In the above configuration (8), it is preferable that the height of the gas flow control bump be set to 0.3 mm or higher and 1.0 mm or lower. The reason why the height of the gas flow control bump is set to 0.3 mm or higher is that if it is lower than 0.3 mm, gas easily flows over the gas flow control bump. The reason why the height of the gas flow control bump is set to 1.0 mm or lower is that if it is higher than 1.0 mm, a flow of the foam resin material may be interrupted by the gas flow control bump.

According to the present invention, it is possible to provide a soundproofing device that is capable of securing a floating structure, does not need T-shaped collars, and has small protrusions from sound source members, and to provide a foam moulding method for producing a soundproofing cover for the soundproofing device, and to provide a foam moulding die for producing the soundproofing cover for the soundproofing device.

### BRIEF DESCRIPTION OF THE DRAWINGS

FIG. 1 is a perspective view of a cylinder block on which soundproofing devices according to a first embodiment of the present invention are disposed;
FIG. 2 is a perspective view of the inside of a frame II shown in FIG 1 (a portion in which a bolt is disposed);
FIG 3 is an exploded perspective view of the portion in which the bolt is disposed;
FIG 4 is a sectional view taken in the axial direction to show the portion in which the bolt is disposed;
FIG 5 is a sectional view taken in the axial direction to show a portion in which a press clip is disposed in a soundproofing device according to a second embodiment of the present invention;
FIG. 6 is a perspective view of a press clip used in the soundproofing device;
FIG. 7 is a sectional view taken in the axial direction to show a portion in which a bolt is disposed in a soundproofing device according to a third embodiment of the present invention;
FIG 8 is a transparent perspective view of foam moulding dies according to a fourth embodiment of the present invention;
FIG 9 is an exploded perspective view of the foam moulding dies;
FIG 10 is a partially sectional perspective view of the front left portion of the foam moulding dies;
FIG 11 is a partially sectional exploded perspective view of the front left portion;
FIG 12A is a sectional view taken in the up-down direction to show the front left portion;
FIG 12B is a sectional view taken along the Vb-Vb direction in the FIG 12A;
FIG 13 is an enlarged view of the inside of a frame VI in FIG 12A;
FIG 14A is a sectional view taken in the up-down direction to show the foam moulding dies in the first half period of foam moulding;
FIG 14B is a sectional view taken in the up-down direction to show the foam moulding dies in the last half period of foam moulding;
FIG. 15 is a perspective view of a cylinder block on which soundproofing covers according to a fourth embodiment of the present invention are disposed;
FIG 16 is a partially sectional perspective view of the front left portion of the soundproofing cover that has been mounted on the cylinder block;
FIG 17 is a partially sectional perspective view of the front left portion of the soundproofing cover that is not yet mounted on the cylinder block;
FIG 18A is a transparent top view of foam moulding dies according to a fifth embodiment of the present invention;
FIG 18B is a sectional view taken along the XIb-XIb direction in FIG. 18A;
FIG 19 is a sectional view taken in the up-down direction to show the front left portion of foam moulding dies according to a sixth embodiment of the present invention; and
FIG 20 is a sectional view taken in the axial direction to show a portion in which a bolt is disposed in a soundproofing device in the related art.

### DETAILED DESCRIPTION OF THE EMBODIMENTS

Embodiments of the soundproofing device according to the present invention will be described hereinafter.

### First Embodiment

### Arrangement of Soundproofing Device

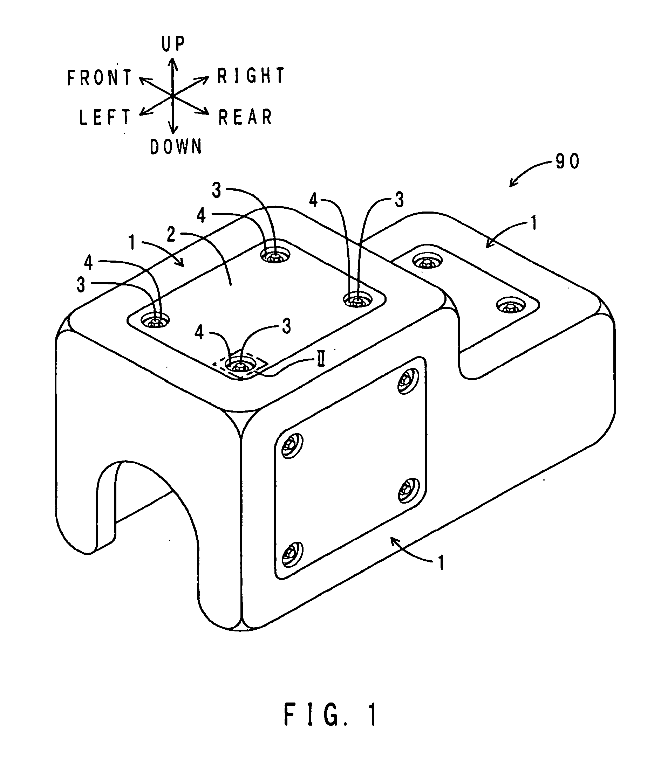

Arrangement of soundproofing devices according to a first embodiment of the present invention will be briefly described hereinafter. FIG 1 is a perspective view of a cylinder block on which the soundproofing devices according to the present embodiment are disposed. In total, there are three soundproofing devices 1 according to the present embodiment disposed on upper surfaces and a side surface of the cylinder block 90, as shown in FIG 1. The three soundproofing devices 1 are disposed inside borders formed on the surfaces of the cylinder block 90, respectively. The cylinder block 90 is included in a sound source member referred to in the present invention.

### Configuration of Soundproofing Devices

The configuration of the soundproofing devices 1 according to the present embodiment will be described hereinafter. The three soundproofing devices 1 have the same configuration and effects. Therefore, the following description will centre on the soundproofing device 1 at the upper left and thus, the description of the remaining two soundproofing devices 1 will be omitted.

The soundproofing device 1 includes a soundproofing cover 2, four bolts 3 and four washers 4. The portions in which the four bolts 3 are disposed have the same configuration and effects. Therefore, the following description will centre on the portion (in a frame II) in which the bolt 3 at the rear left is disposed to omit description of the portions in which the remaining three bolts 3 are disposed.

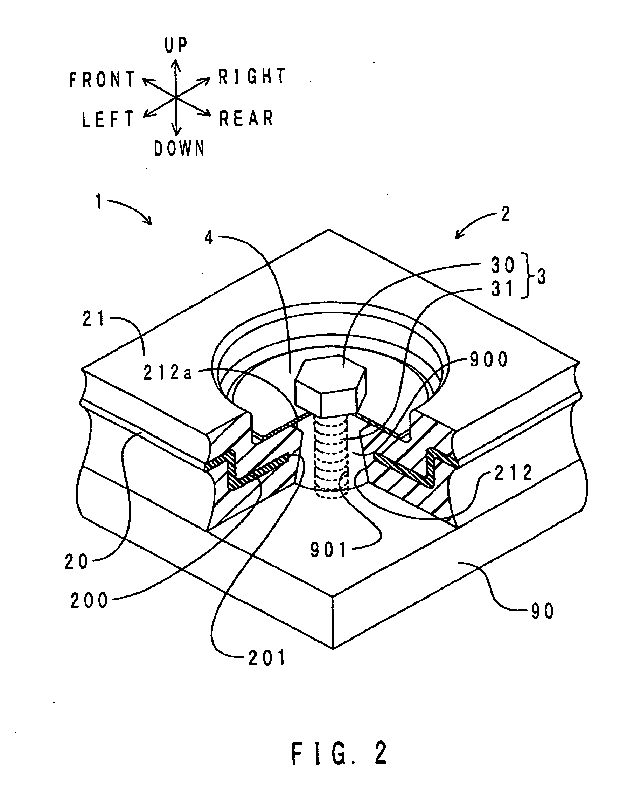

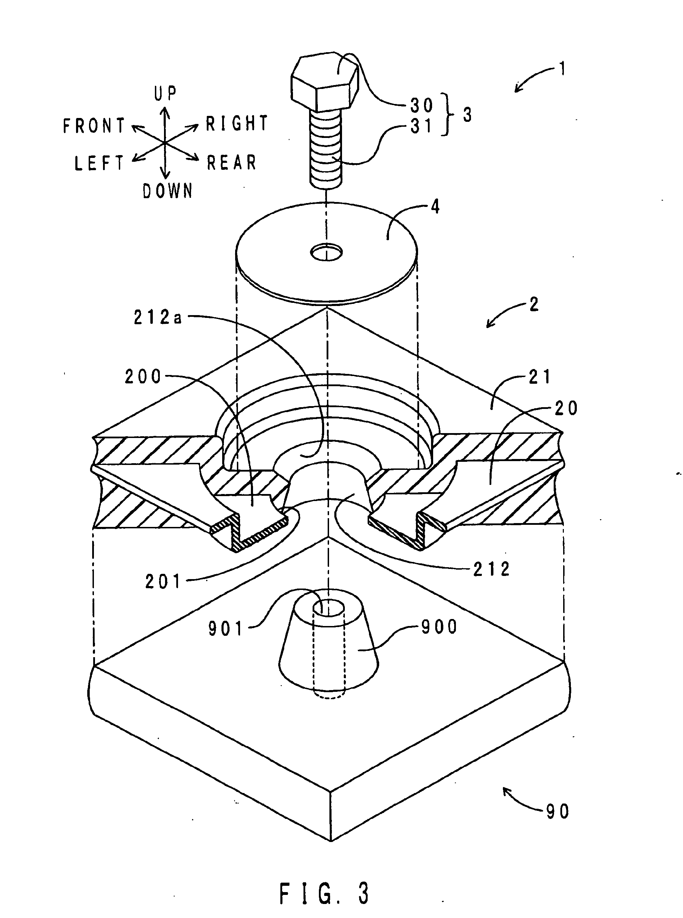

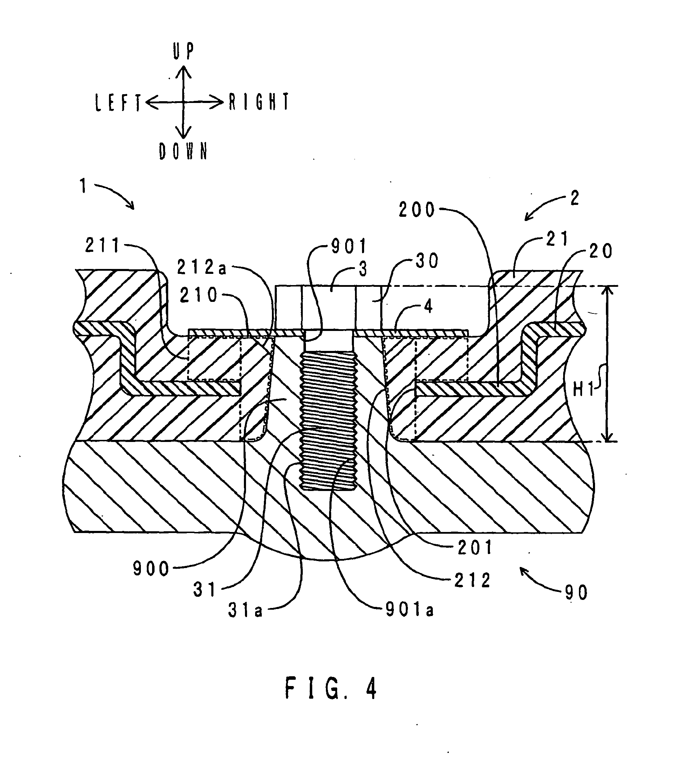

FIG 2 is a perspective view of the inside of the frame II shown in FIG 1 (the portion in which the bolt is disposed). FIG 3 is an exploded perspective view of the portion in which the bolt is disposed. FIG 4 is a sectional view taken in the axial direction to show the portion in which the bolt is disposed. As shown in FIGS. 2 to 4, a boss 900 is provided to protrude upwards from the upper surface of the cylinder block 90. The boss 900 has a cylindrical shape with a short axis. A fixed recessed portion 901 is provided on the top surface of the boss 900. The fixed recessed portion 901 extends in the up-down direction. A screw portion 901a is formed on the inner circumferential surface of the fixed recessed portion 901. The screw portion 901 a has an indented shape extending spirally.

The bolt 3 includes a head 30 and a shank 31. The shank 31 extends downwards from the head 30. The shank 31 is inserted and tightened into the fixed recessed portion 901. A screw portion 31a is formed on the outer circumferential surface of the shank 31. The screw portion 31 a has an indented shape extending spirally. The screw portion 31a of the shank 31 is screwed into the screw portion 901 a of the fixed recessed portion 901.

The washer 4 has a circular ring shape. The washer 4 is provided around the shank 31 of the bolt 3. The washer 4 is caught between the lower surface of the head 30 of the bolt 3 and the top surface of the boss 900.

The soundproofing cover 2 includes a cover body 20 and a sound absorbing member 21. The cover body 20 is made of polyamide (PA) and has a plate shape. Mounting recessed portions 200 are formed at the four corners of the cover body 20, respectively. The cross section of the mounting recessed portion 200 has a substantially circular shape. The mounting recessed portion 200 is recessed downwards (towards the upper surface of the cylinder block 90). A through hole 201 is drilled substantially at the centre of the bottom wall of the mounting recessed portion 200. The through hole 201 penetrates the bottom wall of the mounting recessed portion 200 in the up-down direction. The barrel of the boss 900 on the cylinder block 90 is inserted into the through hole 201 such that they are spaced at a predetermined distance. The inner diameter of the through hole 201 is smaller than the outer diameter of the washer 4. Therefore, the lower surface of the washer 4 is disposed above an area surrounding the through hole 201 such that they are spaced at a predetermined distance.

The sound absorbing member 21 is made of polyurethane foam and covers substantially the entire lower surface of the cover body 20 and part of the upper surface thereof. In other words, the sound absorbing member 21 extends from the lower surface of the cover body 20 through the through hole 201 to the upper surface of the cover body 20. A boss insertion hole 212 is formed in the sound absorbing member 21. The boss insertion hole 212 is disposed radially inside the through hole 201. The boss 900 is inserted into the boss insertion hole 212.

As shown by a dotted line frame in FIG. 4, the sound absorbing member 21 includes a radial direction floating portion 210 and an axial direction floating portion 211. Seen in the axial direction, the radial direction floating portion 210 is disposed in a ring shape in a portion between the inner circumferential surface of the through hole 201 and the outer circumferential surface of the boss 900 (the inner circumferential surface of the boss insertion hole 212). The axial direction floating portion 211 is disposed in a ring shape between the area surrounding the through hole 201 on the upper surface of the cover body 20 and the lower surface of the washer 4.

A chamfered portion 212a is formed around the entire periphery of the upper end opening of the boss insertion hole 212. Near the top surface of the boss 900, therefore, the sound absorbing member 21 is not disposed around the entire periphery. The upper end opening of the boss insertion hole 212 has a tapered shape whose diameter decreases downwardly.

### Method for Manufacturing and Method for Mounting Soundproofing Device

A method for manufacturing and a method for mounting the soundproofing device 1 according to the present embodiment will be briefly described hereinafter. First, the cover body 20 produced beforehand is disposed in the cavity of the dies. A foamed polyurethane material (polyurethane mixed in a predetermined proportion with desired additives that are selected from foaming agents, lubricants, fillers, colourings, fire retardants, various stabilizers and other substances) is poured into the cavity. Then, the dies are tightened. Under this condition, foam moulding is performed to mould the sound absorbing member 21. Simultaneously, the sound absorbing member 21 and cover body 20 are integrated. The soundproofing cover 2 is thus produced.

Subsequently, the soundproofing cover 2 is disposed in the predetermined position on the cylinder block 90. At this moment, the bosses 900 are inserted relatively into the boss insertion holes 212. Under this condition, the bolts 3 to which the washers 4 are attached are inserted into the fixed recessed portions 901 on the bosses 900. The washers 4 are caught and fixed between the lower surfaces of the heads 30 of the bolts 3 and the top surfaces of the bosses 900. The soundproofing device 1 according to the present embodiment is thus obtained. Simultaneously, the soundproofing device 1 according to the present embodiment is mounted on the cylinder block 90.

### Effects of Soundproofing Device

The effects of the soundproofing device 1 according to the present embodiment will be described hereinafter. As shown in FIG 20, the boss 101 is disposed under the through hole 104a in the soundproofing device 103 according to the related art. Therefore, the protrusion H100 of the bolt 109 from the surface of the engine 100 is large.

On the other hand, the boss 900 is disposed radially inside the through hole 201 of the soundproofing device 1 according to the present embodiment. In addition, the T-shaped collar 106 as shown in FIG 20 is not disposed. Therefore, the protrusion H1 of the bolt 3 from the upper surface of the cylinder block 90 is small. As a result, the bolt 3 does not tend to interfere with the installation when the cylinder block 90 is installed in the engine compartment. Also, when operations are conducted on members adjacent to the cylinder block 90, the bolt 3 does not tend to interfere with the operations.

In the soundproofing device 1 according to the present embodiment, the radial direction floating portion 210 is disposed between the through hole 201 and boss 900. Moreover, the axial direction floating portion 211 is disposed between the washer 4 and the area surrounding the through hole 201. Therefore, vibrations of the cylinder block 90 are not easily transmitted to the cover body 20. As a result, the cover body 20 is less likely to resonate.

In foam moulding of the sound absorbing member 21, the washer 4 is not disposed in the cavity. Therefore, burrs are not formed around the washer 4. As a result, the bolt 3 can be easily tightened into the fixed recessed portion 901. Also, the bolt 3 does not tend to fall out of the fixed recessed portion 901 after being tightened.

The top surface of the boss 900 is surrounded with the chamfered portion 212a from the outside in the radial direction. Therefore, when the bolt 3 is inserted into the fixed recessed portion 901, the sound absorbing member 21 is not easily caught between the lower surface of the washer 4 and the top surface of the boss 900 or between the outer circumferential surface of the bolt 3 and the inner circumferential surface of the fixed recessed portion 901. Thus, it is easy to fix the bolt 3 into the fixed recessed portion 901. Also, the bolt 3 does not easily fall out of the fixed recessed portion 901 after being fixed.

The mounting recessed portions 200 are disposed in the cover body 20. The through hole 201 is disposed in the bottom wall of the mounting recessed portion 200. It is, therefore, possible to further reduce the protrusion H1 from the cylinder block 90 by the length of recess of the bottom wall of the mounting recessed portion 200. It is also possible to attain high sound absorbing performance by ensuring the thickness of the sound absorbing member 21 disposed in portions except the mounting recessed portions 200 on the cover body 20.

In the soundproofing device 1 according to the present embodiment, the inside of the washer 4 in the radial direction is caught between the head 30 of the bolt 3 and the top surface of the boss 900. The tightening force of the bolt 3 against tne fixed recessed portion 901 is transmitted through the washer 4 to the axial direction floating portion 211. It is, therefore, possible to hold down the axial direction floating portion 211 indirectly with the tightening force of the bolt 3.

In the soundproofing device 1 according to the present embodiment, substantially the entire length of the shank 31 of the bolt 3 is inserted into the fixed recessed portion 901. In other words, the bolt 3 is buried in the boss 900 with the head 30 out. Therefore, even though a load is applied to the bolt 3 in the direction perpendicular to the shank, a possibility that a deficiency arises to the bolt 3 is slim.

### Second Embodiment

A second embodiment of the present invention differs from the first embodiment in press clips being disposed instead of the bolts and the washers. Thus, only the difference will be described hereinafter.

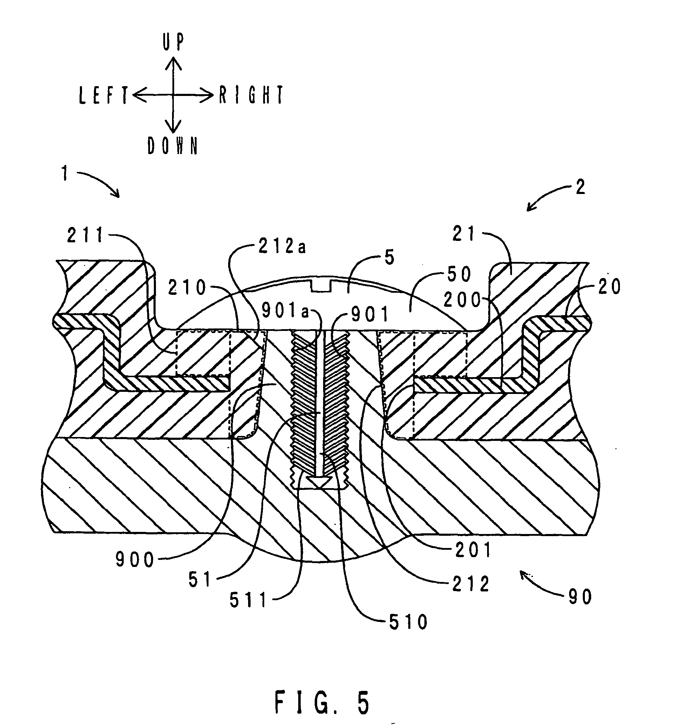

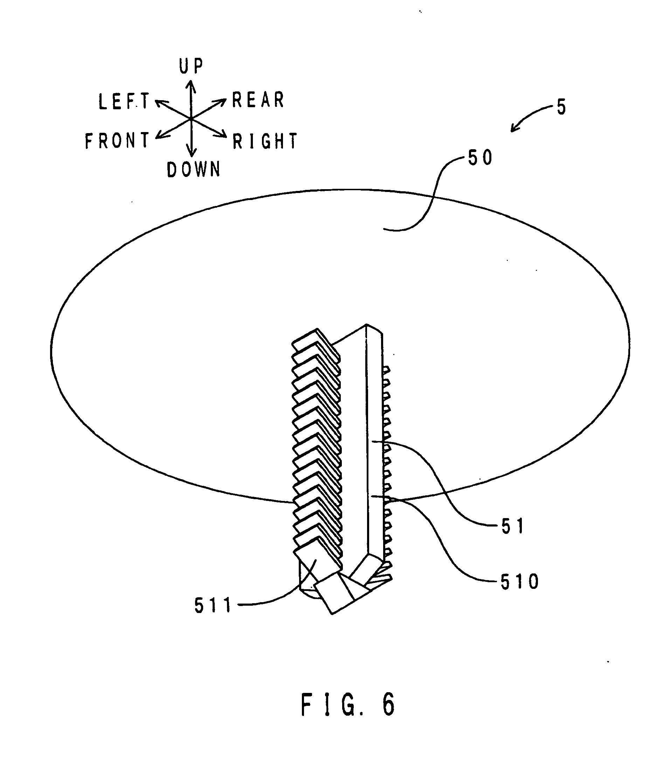

FIG 5 is a sectional view taken in the axial direction to show a portion in which a press clip is disposed in the soundproofing device according to the present embodiment. Portions corresponding to those shown in FIG 4 will be indicated by the same reference symbols. FIG 6 is a perspective view of a press clip used in the soundproofing device according to the present embodiment.

A press clip 5 is made of polyamide (PA) and as a whole has the shape of an umbrella, as shown in FIGS. 5 and 6. The press clip 5 includes a head 50 and a shank 51. The head 50 is included in a ring member according to one aspect of the present invention. The shank 51 is included in a fixing member according to one aspect of the present invention.

The head 50 has a circular shape. The top surface of the head 50 has the shape of a curved surface. The shank 51 extends downwards from substantially the centre of the lower surface of the head 50. The shank 51 includes a substrate 510 and numerous reverse fins 511. The substrate 510 has an elongated plate shape and extends in the up-down direction. The reverse fin 511 has the shape of a small chip. The reverse fins 511 are provided to protrude from both left and right surfaces of the substrate 510. The tips of the reverse fins 511 face upwards. The numerous reverse fins 511 are aligned in the up-down direction.

The press clip 5 is pressed downwards into the fixed recessed portion 901. At this moment, the tips of the reverse fins 511 interfere with the screw portion 901a of the fixed recessed portion 901. However, the tips of the reverse fins 511 face upwards. The reverse fins 511, therefore can readily deform elastically even though they interfere with the screw portion 901a. As a result, the press clip 5 shows a small insertion resistance.

After the press clip 5 is pressed down, the reverse fins 511 engage the screw portion 901 a of the fixed recessed portion 901. The tips of the reverse fins 511 face upwards. Therefore, the tips of the reverse fins 511 are caught in the screw portion 901 a even in an attempt to pull the press clip 5 out of the fixed recessed portion 901. As a result, the press clip 5 shows a great withdrawal resistance.

Portions of the soundproofing device 1 according to the present embodiment that have the common configuration have the same effects as those of the soundproofing device 1 according to the first embodiment. The soundproofing device 1 according to the present embodiment includes the press clips 5 into which the heads 50 and shanks 51 are integrated, which results in a reduction in the number of components. The smaller number of components facilitates the installation of the soundproofing device 1. Moreover, it is possible to mount the soundproofing device 1 on the cylinder block 90 very quickly by using the press clips 5, which also facilitates the installation of the soundproofing device 1. In addition, the reverse fins 511 facing upwards are disposed on the press clip 5. Therefore, the press clip 5 can be easily pressed into the fixed recessed portion 901. Meanwhile, the press clip 5 does not easily fall out of the fixed recessed portion 901.

### Third Embodiment

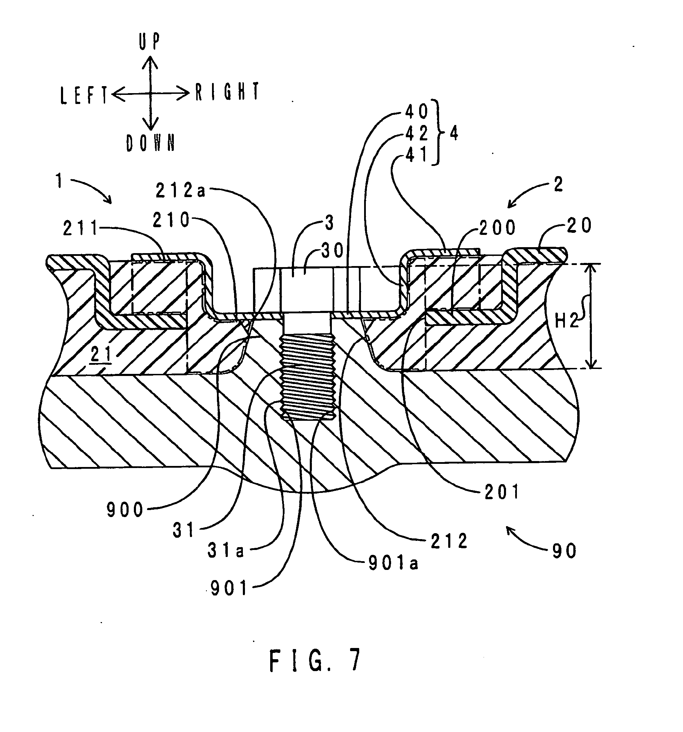

A third embodiment of the present invention differs from the first embodiment in a smaller protrusion of the boss from the upper surface of the cylinder block. Thus, only the difference will be described hereinafter. FIG 7 is a sectional view taken in the axial direction to show a portion in which a bolt is disposed in the soundproofing device according to the present embodiment. Portions corresponding to those shown in FIG 4 will be indicated by the same reference symbols.

As shown in FIG 7, the washer 4 has the shape of a stepped circular ring. In other words, the washer 4 includes a central portion 40, perimeter portion 41 and coupling portion 42. The central portion 40 has a ring shape with a small diameter. The central portion 40 is provided around the shank 31 of the bolt 3. The perimeter portion 41 has a ring shape with a large diameter. The perimeter portion 41 is disposed substantially flush with the opening end of the mounting recessed portion 200. The coupling portion 42 has a cylindrical shape with a short axis. The coupling portion 42 couples the central portion 40 and the perimeter portion 41 in the up-down direction.

Seen in the axial direction, the axial direction floating portion 210 is disposed in a ring shape in a portion between the inner circumferential surface of the through hole 201 and the outer circumferential surface of the boss 900. The axial direction floating portion 211 is disposed in a ring shape between the area surrounding the through hole 201 in the upper surface of the mounting recessed portion 200 and the lower surface of the perimeter portion 41 of the washer 4.

Portions of the soundproofing device 1 according to the present embodiment that have the common configuration have the same effects as those of the soundproofing device 1 according to the first embodiment. In the soundproofing device 1 according to the present embodiment, the perimeter portion 41 of the washer 4 is disposed above the central portion 40 thereof. It is, therefore; possible to ensure the axial direction floating portion 211 with adequate thickness even though the protrusion of the boss 900 from the upper end of the through hole 201 is small (or zero). In the soundproofing device 1 according to the present embodiment, the protrusion of the boss 900 is small, which enables a further reduction in the protrusion H2 of the bolt 3 from the upper surface of the cylinder block 90.

### Fourth Embodiment

A soundproofing cover for a soundproofing device according to a fourth embodiment of the present invention is produced with foam moulding dies and a foam moulding method that will be described below.

### Foam Moulding Dies

### Overall Configuration of Foam Moulding Dies

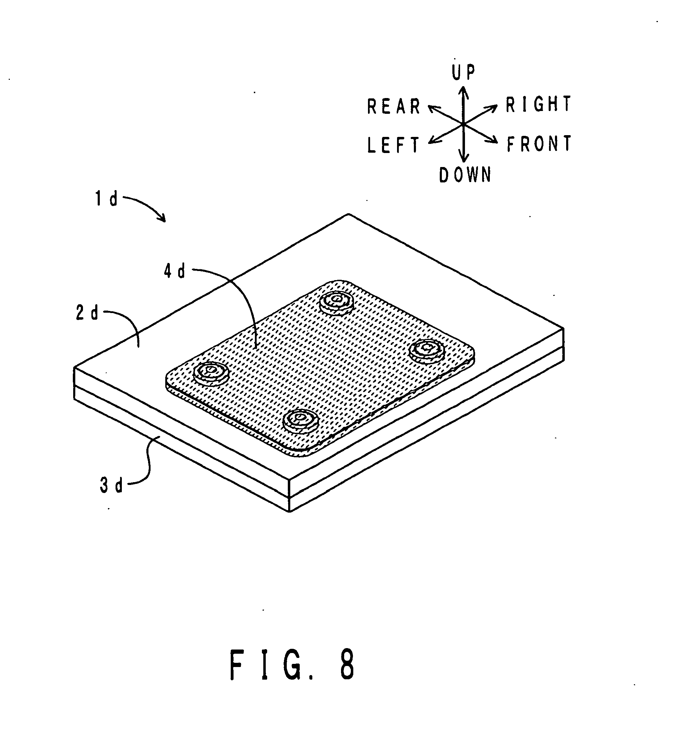

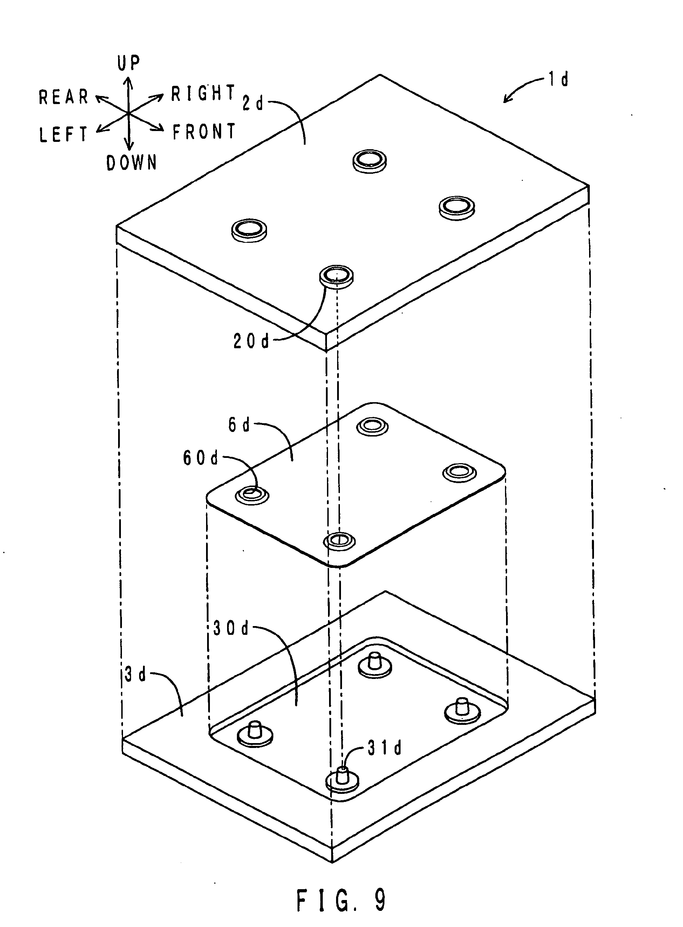

The overall configuration of foam moulding dies according to the present embodiment will be described hereinafter. FIG 8 is a transparent perspective view of the foam moulding dies according to the present embodiment. FIG. 9 is an exploded perspective view of the foam moulding dies. In FIG 8, hatching is applied to a cavity for convenience of description. In FIG 9, an upper die is shown as transparent. As shown in FIGS. 8 and 9, foam moulding dies 1d according to the present embodiment include an upper die 2d and a lower die 3d.

The upper die 2d is made of aluminium alloy and has the shape of a rectangular parallelepiped. Recessed portions 20d are provided on the lower surface of the upper die 2d. The recessed portion 20d has the shape of a circular cup opening downwardly. There are four recessed portions 20d disposed on the lower surface of the upper die 2d. The four recessed portions 20d are disposed at positions corresponding to four corners of a rectangle extending in the left-right direction.

The lower die 3d is made of aluminium alloy and has the shape of a rectangular parallelepiped. The lower die 3d is disposed under the upper die 2d. A recessed portion 30d is provided on the upper surface of the lower die 3d. The recessed portion 30d has the shape of a rectangular space opening upwardly. Projecting portions 31d are provided to protrude from the lower bottom surface of the recessed portion 30d. The projecting portion 31d has a cylindrical shape. There are four projecting portions 31d disposed on the lower bottom surface of the recessed portion 30d. The four projecting portions 31d are disposed at four corners of the recessed portion 30d. In a mould clamping state described later, the four projecting portions 31d are accommodated in the four recessed portions 20d on the upper die 2d.

A cover body 6d is made of polyamide and has a rectangular plate shape. The cover body 6d is a component of a soundproofing cover (foam moulded article) to be produced. The cover body 6d is held by the lower surface of the upper die 2d in a mould open state. The cover body 6d is held between the upper die 2d and lower die 3d in a mould clamping state. Through holes 60d are drilled in the cover body 6d. The through holes 60d are disposed at four corners of the cover body 6d. In a mould clamping state described later, the projecting portions 31d on the lower die 3d are inserted into the four through holes 60d.

As described above, a cavity 4d is defined between the four recessed portions 20d on the upper die 2d and the recessed portion 30d on the lower die 3d in the mould clamping state. The surfaces of the four recessed portions 20d on the upper die 2d and the surface of the recessed portion 30d on the lower die 3d, therefore, are all included in moulding surfaces referred to in the present invention. The cover body 6d is accommodated in the cavity 4d.

### Configuration of Four Corners in Foam Moulding Dies

The configuration of four corners of the foam moulding dies 1d according to the present embodiment will be described hereinafter. As described above, the recessed portions 20d on the upper die 2d, the projecting portions 31d on the lower die 3d, and the through holes 60d in the cover body 6d are disposed at the four corners of the foam moulding dies 1d. The configuration, arrangement and the like are common among the four sets (of the recessed portion 20d, the projecting portion 31d and the through hole 60d). The following description, therefore, will centre on the set (of the recessed portion 20d, the projecting portion 31d and the through hole 60d) at the front left to omit description of the remaining three sets (of the recessed portion 20d, the projecting portion 31d and the through hole 60d).

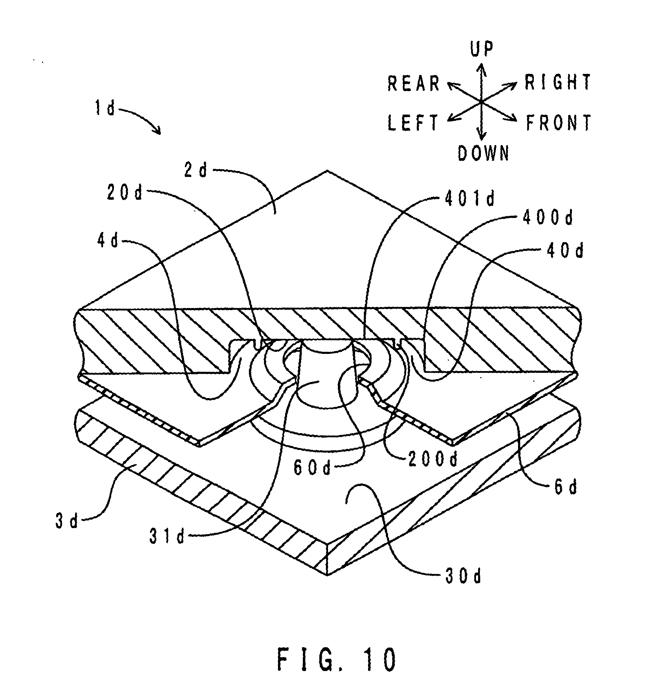

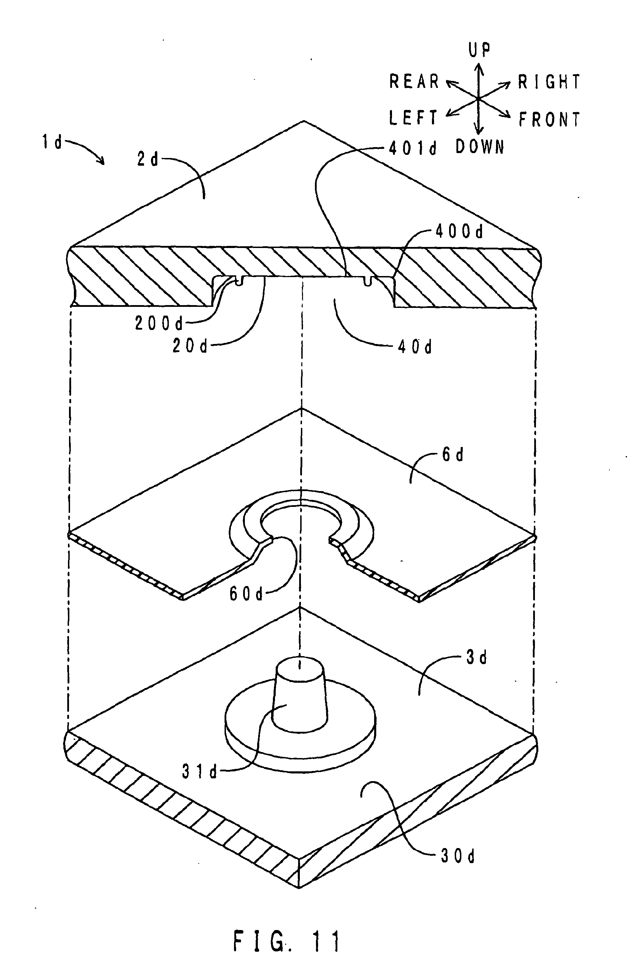

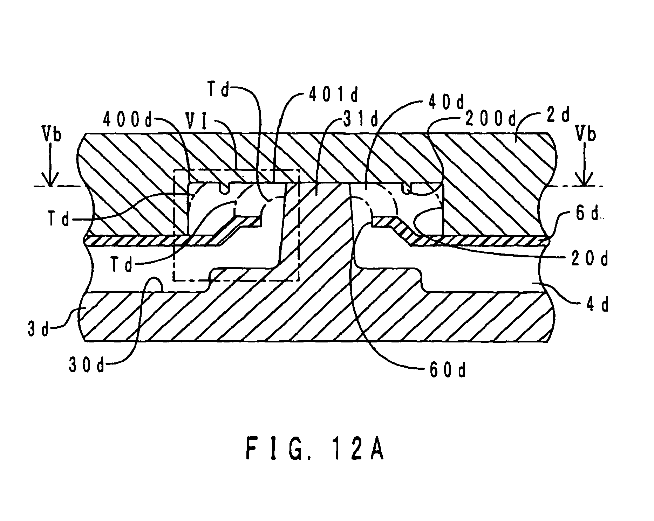

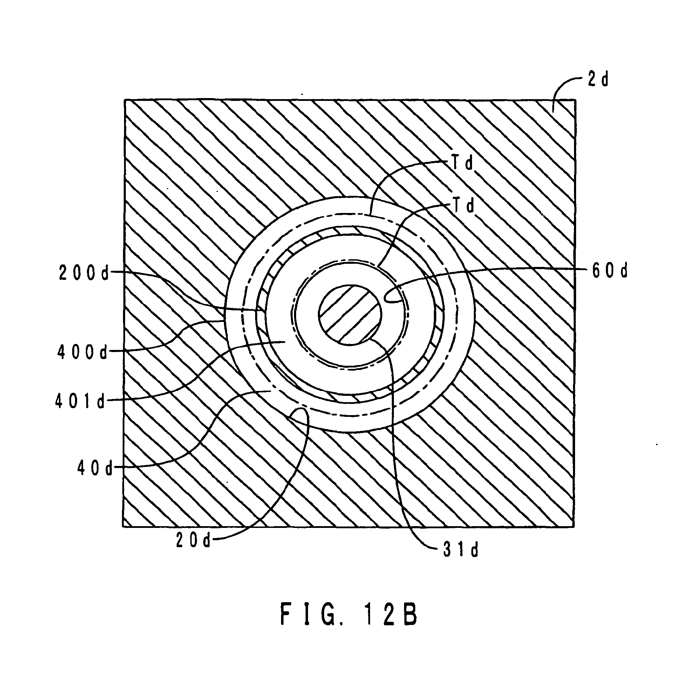

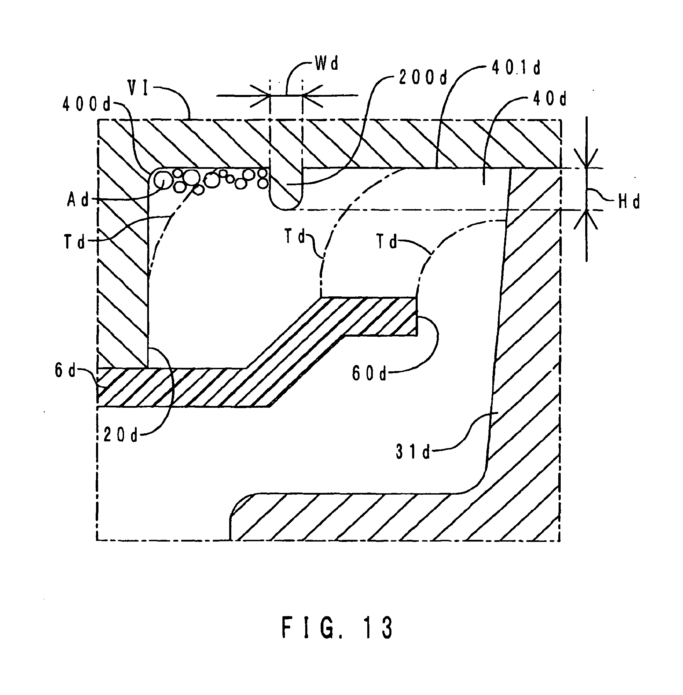

FIG 10 is a partially sectional perspective view of the front left portion of the foam moulding dies according to the present embodiment FIG 11 is a partially sectional exploded perspective view of the front left portion. FIG 12A is a sectional view taken in the up-down direction to show the front left portion. FIG 12B is a sectional view taken along the Vb-Vb direction in the FIG 12A. FIG 13 is an enlarged view of the inside of the frame VI in FIG 12A.

As shown in FIGS. 10 to 13, an air flow control rib 200d is provided to protrude downwards from the upper bottom surface of the recessed portion 20d on the upper die 2d. The air flow control rib 200d is included in a gas flow control bump referred to in the present invention. The air flow control rib 200d has an annular shape. As shown in FIG 13, the cross section of the air flow control rib 200d has a U shape. The total length Hd of the air flow control rib 200d in the up-down direction is 0.5 mm. The thickness Wd of the air flow control rib 200d in the left-right direction is 0.5 mm.

In the mould clamping state, the projecting portion 31d on the lower die 3d penetrates through the through hole 60d in the cover body 6d and is accommodated in the recessed portion 20d on the upper die 2d. The top surface of the projecting portion 31d is in contact with substantially the centre of the upper bottom surface of the recessed portion 20d. Seen from above, the projecting portion 31d, the through hole 60d and the air flow control rib 200d are arranged substantially as concentric circles from inside to outside in the radial direction and accommodated in the recessed portion 20d, as shown in FIG. 12B.

The cavity 4d includes a boss moulding portion 40d. The boss moulding portion 40d is defined by the recessed portion 20d on the upper die 2d and the projecting portion 31d on the lower die 3d. In other words, the boss moulding portion 40d has a cylindrical shape with a short axis. The boss moulding portion 40d has a recessed, sack-like shape. To be specific, an opening of the boss moulding portion 40d is disposed only in a gap between the inner circumferential surface of the through hole 60d and the outer circumferential surface of the projecting portion 31d. This means that a foamed polyurethane material flows one way through the gap between the inner circumferential surface of the through hole 60d and the outer circumferential surface of the projecting portion 31d into the boss moulding portion 40d, as described later. The boss moulding portion 40d includes an air trapping portion 400d and functional surface moulding portion 401d. The air trapping portion 400d is included in a gas accumulation portion referred to in the present invention. The air trapping portion 400d is disposed on the rim of the boss moulding portion 40d, that is, in a corner that constitutes a boundary between the inner circumferential surface and upper bottom surface of the recessed portion 20d. The functional surface moulding portion 401 d is disposed radially inside the boss moulding portion 40d, that is, radially outside the outer circumferential surface of the projecting portion 31d. The air flow control rib 200d is disposed radially inside the air trapping portion 400d and radially outside the functional surface moulding portion 401d.

### Foam Moulding Method

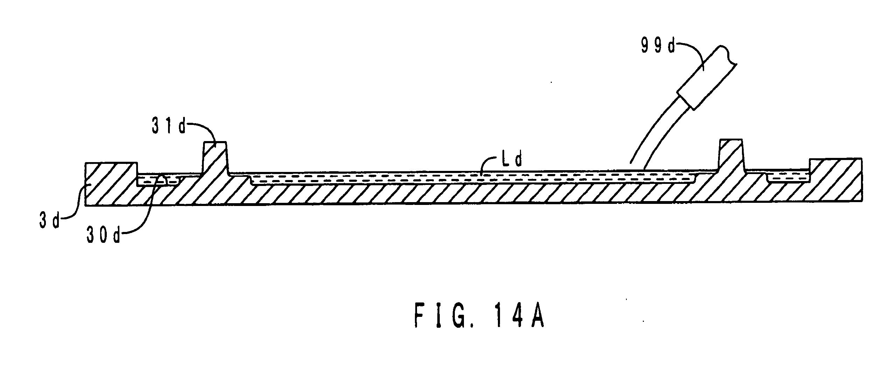

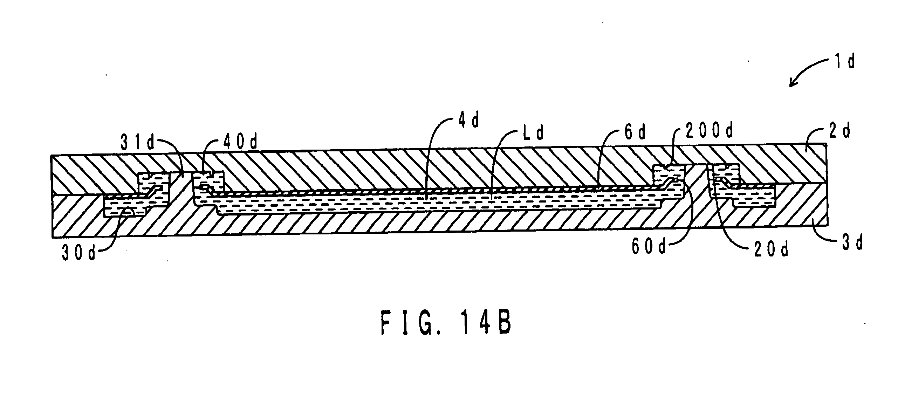

A foam moulding method according to the present embodiment will be described hereinafter. FIG. 14A is a sectional view taken in the up-down direction to show the foam moulding dies according to the present embodiment in the first half period of foam moulding. FIG 14B is a sectional view taken in the up-down direction to show the foam moulding dies in the last half period of foam moulding. FIGS. 14A and 14B are sectional views of a portion that contains two sets (of a recessed portion 20d, projecting portion 31 d and through hole 60d) on the front in FIG 9.

As shown in FIG. 14A, a foamed polyurethane material Ld (polyurethane mixed in a predetermined proportion with desired additives that are selected from foaming agents, lubricants, fillers, colourings, fire retardants, various stabilizers and the like) is injected into the recessed portion 30d on the lower die 3d with a nozzle 99d. The foamed polyurethane material Ld is included in foamed resin materials referred to in the present invention.

Subsequently, the upper die 2d on which the cover body 6d is mounted beforehand is disposed over the upper surface of the lower die 3d, as shown in FIG. 14B. In other words, the foam moulding dies 1d are clamped. At this moment, the projecting portions 31d on the lower die 3d are made to penetrate into the through holes 60d in the cover body 6d to come into contact with the upper bottom surfaces of the recessed portions 20d on the upper die 2d. The foamed polyurethane material Ld injected into the recessed portion 30d on the lower die 3d flows from the recessed portion 30d on the lower die 3d through the annular gaps between the inner circumferential surfaces of the through holes 60d and the outer circumferential surfaces of the projecting portions 31d into the recessed portions 20d on the upper die 2d. In other words, the foamed polyurethane material Ld flows through the annular gaps between the inner circumferential surfaces of the through holes 60d and the outer circumferential surfaces of the projecting portions 31d into the boss moulding portions 40d.

In clamping the foam moulding dies 1d, air is confined in the cavity 4d. Air is also generated from the foamed polyurethane material Ld. Therefore, as shown in FIGS. 12A, 12B ad 13, air also flows into the boss moulding portions 40d with the flow of the foamed polyurethane material Ld (flow fronts Td of the foamed polyurethane material indicated with dot-and-dash lines in the figures for reference). Air Ad is included in gases referred to in the present invention.

The foamed polyurethane material and air Ad radially flow from the inside to the outside of the boss moulding portion 40d in the radial direction after passing through the gap between the inner circumferential surface of the through hole 60d and the outer circumferential surface of the projecting portion 31d. The boss moulding portion 40 is filled with the foamed polyurethane material. Due to its low specific gravity, the air Ad essentially tends to move upwards in the boss moulding portion 40d. The air Ad is pressed against the air trapping portion 400d by a flow pressure of the foamed polyurethane material or an inflation pressure generated by foaming. Therefore, once it flows into the air trapping portion 400d, the air Ad does not easily escape therefrom. As a result, most of the air Ad stays in the air trapping portion 400d, as shown in FIG 13.

Some of the air Ad staying in the air trapping portion 400d flows from the air trapping portion 400d to the inside in the radial direction along the upper bottom surface of the recessed portion 20d on the upper die 2d. However, the flow of the air Ad collides with the air flow control rib 200d. Due to its low specific gravity, the air Ad essentially tends to flow upwards. It is, therefore, difficult for the air Ad to flow downwards around the air flow control rib 200d. As a result, the flow of the air Ad does not tend to reach the functional surface moulding portion 401 d.

In foam moulding, air Ad continuously flows into the air trapping portion 400d. Therefore, the volume of the air Ad in the air trapping portion 400d gradually increases, causing the air Ad to project from the air trapping portion 400d to the inside in the radial direction. In other words, the air Ad approaches the functional surface moulding portion 401d. Even under this condition, it is difficult for the air Ad to flow downwards around the air flow control rib 200d. As a result, the air Ad stays in the shape of a partial arc just along the outer circumferential surface of the air flow control rib 200d.

After spreading throughout the cavity 4d, the foamed polyurethane material Ld is cured in the cavity 4d. Thus, a soundproofing cover described below is obtained.

### Soundproofing Covers

### Arrangement of Soundproofing Covers

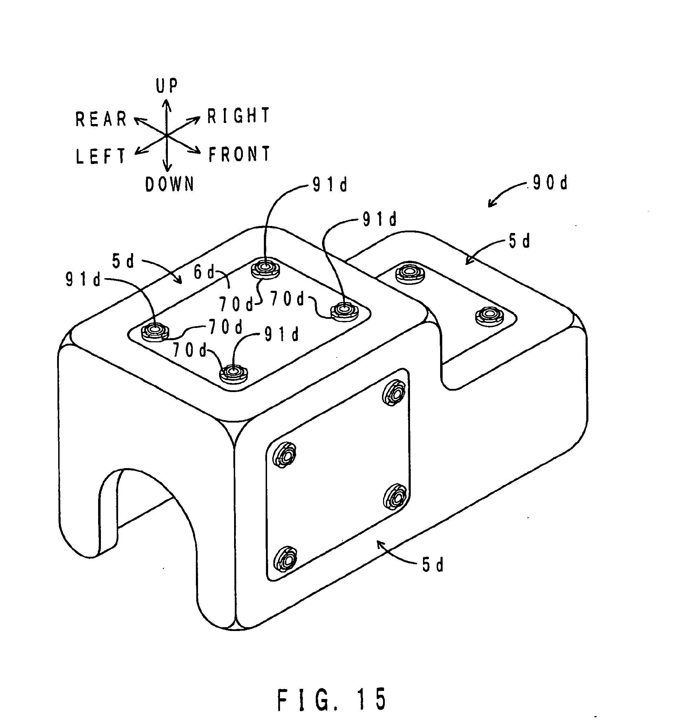

Soundproofing covers according to the present embodiment will be described hereinafter. Firstly, arrangement of soundproofing covers 5d according to the present embodiment will be briefly described. FIG 15 is a perspective view of a cylinder block on which the soundproofing covers according to the present embodiment are disposed. In total, there are three soundproofing covers 5d according to the present embodiment disposed on upper surfaces and a side surface of a cylinder block 90d, as shown in FIG 15. The three soundproofing covers 5d are disposed inside borders formed on the surfaces of the cylinder block 90d of the engine, respectively. The cylinder block 90d is included in a sound source member referred to in the present invention.

### Configuration of Soundproofing Covers

Secondly, the configuration of the soundproofing covers 5d according to the present embodiment will be described. The three soundproofing covers 5d have the same configuration and effects. Therefore, the following description will centre on the soundproofing cover 5d at the upper left to omit description of the remaining two soundproofing covers 5d.

The soundproofing cover 5d is produced in the above foam moulding method using the above foam moulding dies 1d. The soundproofing cover 5d is fixed on the cylinder block 90d with four clips 91d. Portions in which the four clips 91d are disposed have the same configuration and effects. Therefore, the following description will centre on the portion in which the clip 91d at the front left is disposed, to omit description of the portions in which the remaining three clips 91 d are disposed.

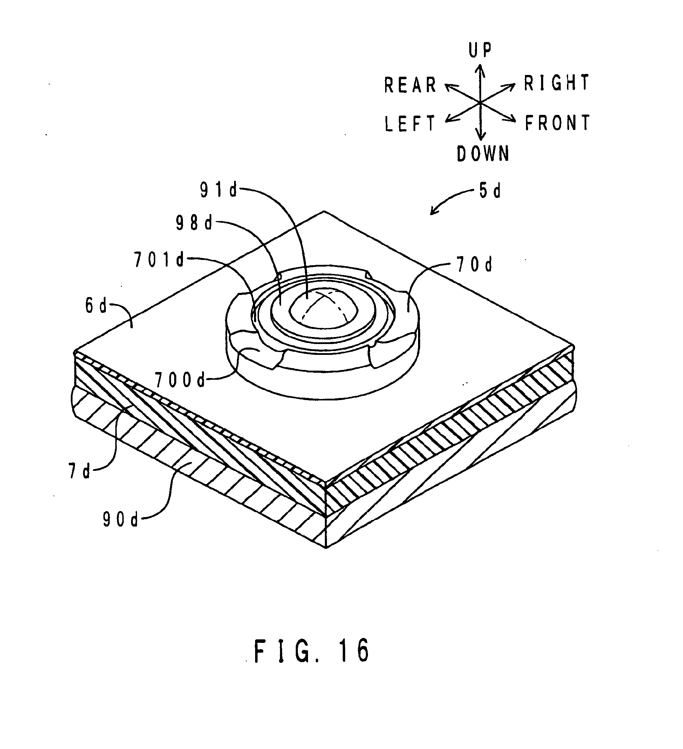

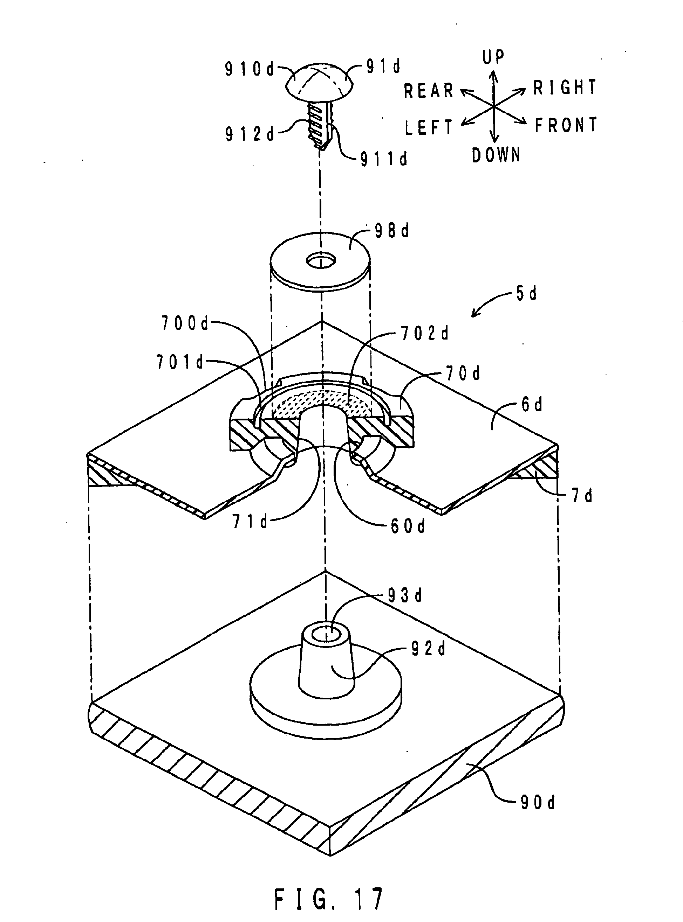

FIG 16 is a perspective view of the front left portion of the soundproofing cover according to the present embodiment that has been mounted on the cylinder block. FIG 17 is a partially sectional perspective view of the front left portion of the soundproofing cover that is not yet mounted on the cylinder block.

As shown in FIGS. 16 and 17, the soundproofing cover 5d includes the cover body 6d and a sound absorbing member 7d. The sound absorbing member 7d is made of polyurethane foam. The sound absorbing member 7d is produced by curing the foamed polyurethane material Ld injected into the cavity 4d, as shown in FIGS. 14A and 14B. The cover body 6d and sound absorbing member 7d are integrated by foam moulding.

The sound absorbing member 7d includes a floating boss 70d and a cover side mounting hole 71d. The floating boss 70d is produced by curing the foamed polyurethane material injected into the boss moulding portion 40d, as shown in FIGS. 12A and 12B.

The floating boss 70d includes a radial direction floating portion and an axial direction floating portion. As shown in FIG 17, the radial direction floating portion is a portion of the floating boss 70d that extends between the inner circumferential surface of the through hole 60d and the outer circumferential surface of an engine side boss 92d. The axial direction floating portion is a portion of the floating boss 70d that extends between an area surrounding the through hole 60d in the upper surface of the cover body 6d and the lower surface of a washer 98d.

Underfilled portions 700d (emphasized in FIGS. 15 to 17), an annular groove 701d and a functional surface 702d (to which hatching is applied in FIG 17) are disposed on the top surface of the floating boss 70d. The functional surface 702d is disposed on the surfaces of the radial direction floating portion and the axial direction floating portion. The annular groove 701d is produced with the air flow control rib 200d shown in FIGS. 12A and 12B. In other words, the cross section of the annular groove 701d has a U shape as with the air flow control rib 200d shown in FIG. 13. The groove depth of the annular groove 701d is 0.5 mm as is the total length Hd of the air flow control rib 200d in the up-down direction shown in FIG 13. The groove width of the annular groove 701 d is 0.5 mm as is the thickness Wd of the air flow control rib 200d in the left-right direction shown in FIG 13.

The underfilled portions 700d are disposed radially outside the annular groove 701d; more specifically, in a corner that constitutes a boundary between the top surface and outer circumferential surface of the floating boss 70d. The underfilled portion 700d has a recessed shape.

Especially, as the underfilled portions 700d at the left and at the front in FIG 16 shows, the annular groove 701d blocks the underfilled portion 700d entering the inside of the annular groove 701d in the radial direction (that is, the functional surface 702d shown in FIG 17).

The functional surface 702d is disposed radially inside the annular groove 701dand radially outside the cover side mounting hole 71d to be described later. The functional surface 702d is produced with the functional surface moulding portion 401 d shown in FIGS. 12A and 12B. In other words, the functional surface 702d has a planar shape corresponding to the shape of the upper bottom surface of the recessed portion 20d shown in FIGS. 12A and 12B. The cover side mounting hole 71d penetrates the sound absorbing member 7d in the up-down direction. The cover side mounting hole 71d opens at the centre of the top surface of the floating boss 70d.

### Configurations of Cylinder Block and Clips

Lastly, the configurations of a cylinder block 90d on which the soundproofing covers 5d according to the present embodiment are mounted and clips 91d will be described. The engine side boss 92d is provided to protrude from the upper surface of the cylinder block 90d. The engine side boss 92d and cover side mounting hole 71d face one another in the up-down direction. An engine side mounting recessed portion 93d is provided on the top surface of the engine side boss 92d. A screw portion is formed on the inner circumferential surface of the engine side mounting recessed portion 93d.

The clip 91d is made of polyamide and includes a head 910d and a leg 911d. The head 910d has a disc shape. The leg 911d is provided to protrude from the lower surface of the head 910d. Numerous engaging portions 912d are disposed in the shape of a barb of a fishhook on the leg 911d.

### Method for Mounting Soundproofing Covers

A method for mounting the soundproofing covers 5d according to the present embodiment will be described hereinafter. First, the soundproofing cover 5d is disposed inside a border formed on the surface of the cylinder block 90d. At this moment, the engine side boss 92d is inserted relatively into the cover side mounting hole 71d. After insertion, a relationship between the heights of the top surfaces of the engine side boss 92d and floating boss 70d is set such that the top surface of the floating boss 70d is slightly higher. Next, the leg 911d of the clip 91d is inserted into a washer 98d. The leg 911d is pressed into the engine side mounting recessed portion 93d with the washer 98d therebetween. The engaging portions 912d on the leg 911d engage the screw portion on the inner circumferential surface of the engine side mounting recessed portion 93d. The engagement prevents the clip 91 d from falling out of the engine side mounting recessed portion 93d.

As described above, the relationship between the heights of the top surfaces of the engine side boss 92d and floating boss 70d before installation of the clip 91d is set such that the top surface of the floating boss 70d is slightly higher. The height difference is overcome with the installation of the clip 91d. In other words, the floating boss 70d is compressed by the difference in height in the up-down direction. The washer 98d receives from the functional surface 702d an elastic restoring force exerted by the floating boss 70d. In contrast, the functional surface 702d receives a downward pressing force from the washer 98d. The pressing force is exerted to the entire functional surface 702d substantially evenly, thereby ensuring a good floating structure between the washer 98d and cylinder block 90d.

### Effects

Effects of the foam moulding method, the foam moulding dies 1d and the soundproofing covers 5d according to the present embodiment will be described hereinafter. With the foam moulding method and the foam moulding dies 1d according to the present embodiment, the flow of the air Ad is blocked by the air flow control rib 200d. Therefore, the air Ad does not easily flow into the functional surface moulding portion 401d. As a result, it is possible to prevent generation of underfilled portions 700d on the functional surface 702d of the soundproofing cover 5d.

With the foam moulding method and the foam moulding dies 1d according to the present embodiment, the air flow control rib 200d extends between the air trapping portion 400d in which the air Ad especially tends to be accumulated and the functional surface moulding portion 401d in the cavity 4d. In other words, the air flow control rib 200d is disposed on a flow route through which the air Ad flows into the functional surface moulding portion 401d most readily. This can effectively prevent the air Ad from flowing into the functional surface moulding portion 401d.

With the foam moulding method and the foam moulding dies 1d according to the present embodiment, by arranging the air flow control rib 200d, the gas flow can be easily controlled without significantly changing the shape of the soundproofing cover 5d.

It is also possible to form the air flow control rib 200d in the foam moulding dies 1d by applying grooving only to necessary portions of a master mould that has the same shape as the soundproofing cover 5d (a mould used as an original to produce the foam moulding dies 1d). Therefore, the air flow control rib 200d can be produced at a low cost.

With the foam moulding method and the foam moulding dies 1d according to the present embodiment, the functional surface moulding portion 401d is surrounded with the annular air flow control rib 200d. Therefore, the air Ad can be prevented from flowing into the functional surface moulding portion 401 d over the entire periphery of the functional surface moulding portion 401d.

With the foam moulding method and the foam moulding dies 1d according to the present embodiment, the functional surface moulding portion 401d is disposed along the upper bottom surface of the recessed portion 20d facing downwards of the moulding surfaces defining the cavity 4d. The air flow control rib 200d protrudes downwards from the upper bottom surface of the recessed portion 20d. The air Ad has a lower specific gravity compared to the foamed polyurethane material Ld. Therefore, the air Ad tends to move upwards in the cavity 4. The air flow control rib 200d according to the present embodiment protrudes downwards from the upper bottom surface of the recessed 20d. It is, therefore, difficult for the air Ad to flow downwards around the air flow control rib 200d. With the foam moulding method and the foam moulding dies 1d according to the present embodiment, it is possible to prevent the air Ad from flowing into the functional surface moulding portion 401d in a more reliable manner.

With the foam moulding method and the foam moulding dies 1d according to the present embodiment, the air trapping portion 400d and the functional surface moulding portion 401d are aligned substantially in the left-right direction along the upper bottom surface of the recessed portion 20d. Thus, even though the volume of the air Ad staying in the air trapping portion 400d gradually increases and the air Ad approaches the functional surface moulding portion 401d, the flow of the air Ad is blocked by the air flow control rib 200d, which makes it difficult for the air Ad to flow into the functional surface moulding portion 401d.

With the foam moulding method and the foam moulding dies 1d according to the present embodiment, the air trapping portion 400d is disposed in the corner between the inner circumferential surface and the upper bottom surface of the recessed portion 20d. The air Ad that has flowed into the corner is pressed against the corner by the flow pressure of the foamed polyurethane material Ld that is applied from outside the corner. Therefore, the air Ad that has flowed into the corner does not easily escape therefrom. In other words, the air Ad tends to be forced into the corner, which makes it easy to form the air trapping portion 400d in the corner. With the foam moulding method and the foam moulding dies 1d according to the present embodiment, it is possible to prevent the air Ad from flowing into the functional surface moulding portion 401 d from the air trapping portion 400d that is the corner in which the air Ad tends to stay.

With the foam moulding method, the foam moulding dies 1d, and the soundproofing cover 5d according to the present embodiment, it is possible to prevent generation of underfilled portions 700d on the functional surface 702d of the floating boss 70d. In other words, it is possible to improve the surface accuracy of the functional surface 702d of the floating boss 70d. Therefore, it is possible to bring the functional surface 702d in secure surface contact with the washer 98d. As a result, the dressing force applied to the functional surface 702d from the washer 98d is exerted to the functional surface 702d substantially evenly. Consequently, backlash of the soundproofing cover 5d can be reduced.

With the soundproofing cover 5d according to the present embodiment, the functional surface 702d is surrounded with the annular groove 701 d. It is, therefore, easy for an operator to identify the functional surface 702d by using the annular groove 701d as a marker. As a result, it is easy for the operator to check whether underfilled portions 700d are formed on the functional surface 702d.

### Fifth Embodiment

A difference between a foam moulding method, foam moulding dies and soundproofing covers according to a fifth embodiment of the present invention and those according to the fourth embodiment is that a foamed polyurethane material is injected into the cavity of the foam moulding dies after mould clamping. Another difference is that an air flow control rib does not have an annular shape. Yet another difference is that an air trapping portion is disposed at a confluence of foamed polyurethane material flows. Only the differences will be described hereinafter.

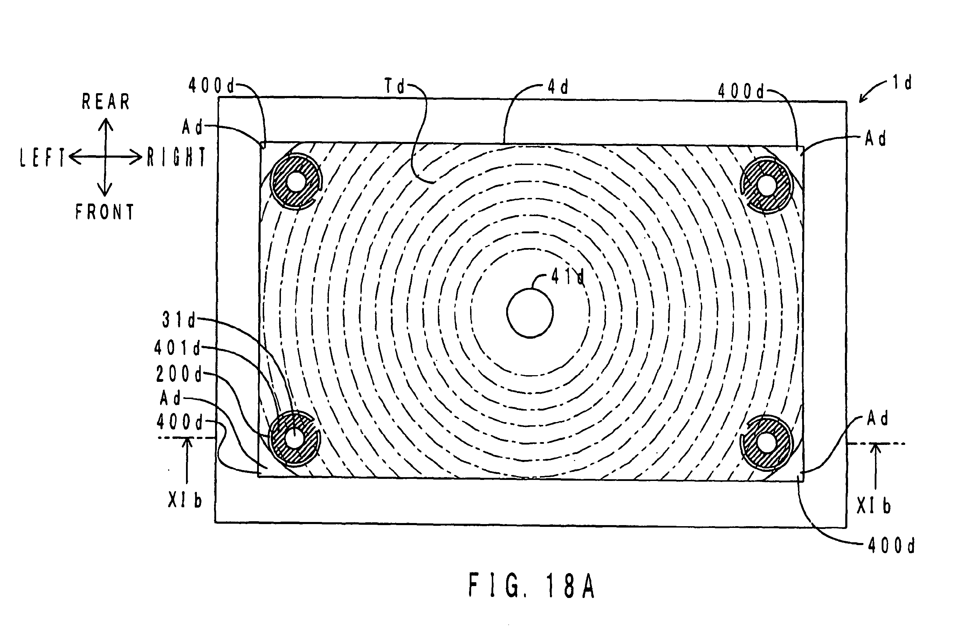

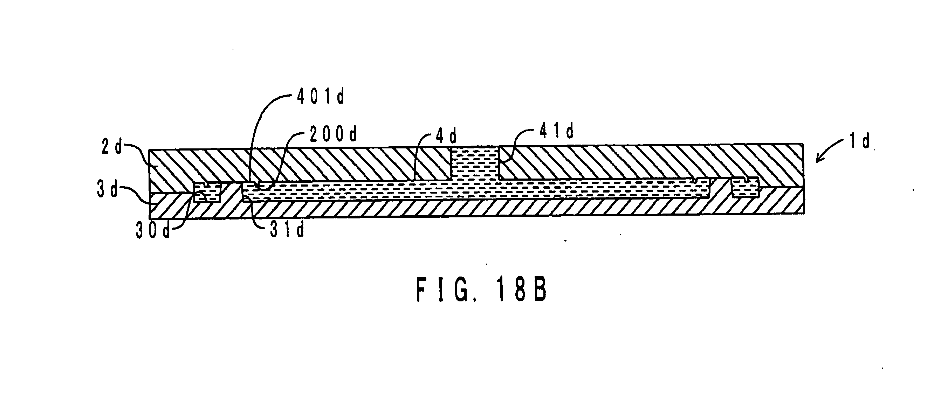

FIG. 18A is a transparent top view of foam moulding dies according to the present embodiment. FIG 18B is a sectional view taken along the XIb-XIb direction in FIG. 18A. Portions in those figures corresponding to those shown in FIGS. 8 to 17 will be indicated by the same reference symbols.

As shown in FIGS. 18A and 18B, the cavity 4d of the foam moulding dies 1d according to the present embodiment has the shape of a rectangular plate. The cavity 4d does not have any insertion member, such as the cover body 6d shown in FIG 9, disposed therein. A gate 41 d is contiguous to the upper surface of the cavity 4d substantially at the centre thereof. Four air trapping portions 400d are disposed at four corners on the upper surface of the cavity 4d (at corners that constitute boundaries between the upper bottom surface and side surfaces of a moulding surface). Four air flow control ribs 200d are disposed inside the four air trapping portions 400d (on the gate 41d side). The air flow control rib 200d extends in a C shape. The opening of the C shape of the air flow control rib 200d faces towards the gate 41d. Four projecting portions 31 d are disposed radially inside the four air flow control ribs 200d. Four functional surface moulding portions 401d (on which hatching is applied in FIG. 18A for convenience of description) are disposed between the outer circumferential surfaces of the four projecting portions 31d and the inner circumferential surfaces of the four air flow control ribs 200d. The functional surface moulding portion 401d has an annular shape. The four functional surface moulding portions 401d are disposed to include the upper surface of the cavity 4d.

A foamed polyurethane material is inserted through the gate 41 into the cavity 4d. Flow fronts Td (shown with dot-and-dash lines in the figure) of the foamed polyurethane material radiate from the gate 41d in the cavity 4d. The flow fronts Td of the foamed polyurethane material diverge due to the projecting portions 31d and merge again downstream of the projecting portions 31d. More specifically, the flow fronts Td merge at the air trapping portions 400d.

Portions of the foam moulding method, the foam moulding dies and the soundproofing covers according to the present embodiment that have the common configurations have the same effects as those of the foam moulding method, the foam moulding dies and the soundproofing covers according to the fourth embodiment. With the foam moulding method and the foam moulding dies according to the present embodiment, the air Ad in the air trapping portions 400d does not easily flow into the functional surface moulding portions 401d although the air flow control ribs 200d open towards the gate 41 d (although not having the annular shape). In other words, the flows of the air Ad into the functional surface moulding portions 401d are blocked when the air Ad comes into contact with the outer circumferential surfaces of the air flow control ribs 200d.

With the foam moulding method and the foam moulding dies according to the present embodiment, it is possible to prevent the air Ad from flowing into the functional surface moulding portions 401d from the air trapping portions 400d formed at the portions at which the flows of the foamed polyurethane material merge.

### Sixth Embodiment

A difference between a foam moulding method, foam moulding dies and soundproofing covers according to a sixth embodiment of the present invention and those according to the fourth embodiment is that an air flow control face is disposed instead of the air flow control rib. Therefore, only the difference will be described hereinafter.

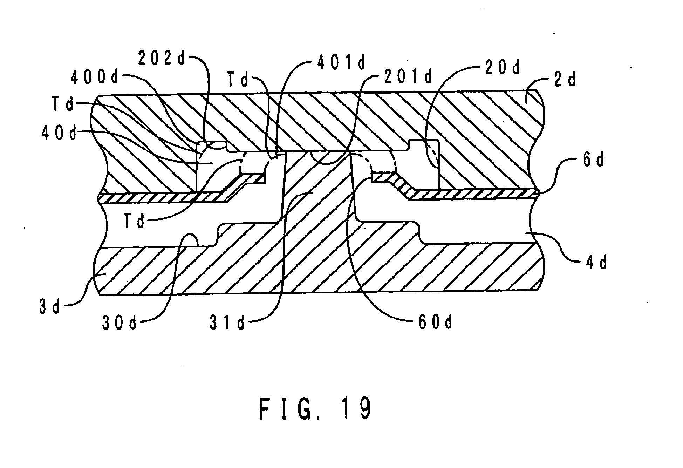

FIG 19 is a sectional view taken in the up-down direction to show the front left portion of the foam moulding dies according to the present embodiment. Portions corresponding to those shown in FIG. 12A will be indicated by the same reference symbols. As shown in FIG 19, a projecting portion 201 d that has a cylindrical shape with a short axis is provided to protrude from the upper bottom surface of the recessed portion 20d. An air flow control face 202d is disposed on the outer circumferential surface of the projecting portion 201 d. The air flow control face 202d is included in a gas flow control bump referred to in the present invention. The air flow control face 202d extends in the up-down direction.

Portions of the foam moulding method, the foam moulding dies and the soundproofing covers according to the present embodiment that have the common configurations have the same effects as those of the foam moulding method, the foam moulding dies and the soundproofing covers according to the fourth embodiment. With the soundproofing cover according to the present embodiment, the functional surface is formed in a recessed portion corresponding to the projecting portion 201d. Therefore, it is easy for an operator to identify the functional surface.

### Others

The embodiments of the soundproofing device according to the present invention and the foam moulding method and the foam moulding die for producing a soundproofing cover for the soundproofing device have been described above. However embodiments of the present invention are not specifically limited to the above embodiments. Various modifications and improvements that can be made by those skilled in the art may be applied to embodiments.

For example, the fixed recessed portion 901 is set to have a bottom in the above embodiments; however, the fixed recessed portion 901 may be a through hole with no bottom as long as the fixed recessed portion 901 can fix a bolt 3 or press clip 5.

The number and arrangement of the bolts 3, the press clips 5 or the washers 4 in a single soundproofing device I are not specifically limited. The bolts 3, the washers 4 and the press clips 5 may all be used and given individual purposes in a single soundproofing device 1; or the bolts 3 and the washers 4 may be integrated.

In the above embodiments, the soundproofing devices 1 are disposed on the cylinder block 90; however, soundproofing devices 1 may be disposed on a cylinder head, a crankcase, a cover case for gears, a cover case for a timing belt, or the like.

In the above embodiments, the sound absorbing member 21 is made of polyurethane foam; however, the material of a sound absorbing member 21 is not specifically limited. For example, it may be made of foamed rubber or silicon foam.

In the above embodiments, the foamed polyurethane material is poured into the cavity with the dies open in production of the soundproofing device 1; however, a foamed polyurethane material may be poured into a cavity after dies are clamped. The cover body 20 and the sound absorbing device 21 are not necessarily moulded integrally. That is, each member may be individually produced and later jointed.

The functional surface moulding portions 401d, the air flow control ribs 200d and the air flow control faces 202d may be disposed in the lower portion of a cavity 4 instead of the upper portion. The functional surface 702d may be in the shape of a curved surface corresponding to the functional surface moulding portion 401 d. The functional surface 702d may be in an indented shape corresponding to the functional surface moulding portion 401 d.

In the above embodiments, the clips 91d are used to fix the soundproofing cover 5d on the cylinder block 90d; however, bolts may be used to fix the soundproofing cover 5d on the cylinder block 90d. In the above embodiments, the cross section of the air flow control rib 200d is in a U shape, however it may be in a V shape or a rectangular shape. The foam moulding dies 1d are not necessarily made of metal.

## Claims

1. A soundproofing device (1) that is disposed on a surface of a sound source member (90, 90d) from which a boss (900, 92d) having a fixed recessed portion (901, 93d) on a top surface thereof is provided so as to protrude, and that includes:
a soundproofing cover (2, 5d) that has a rigid cover body (20, 6d) including a through hole (201, 60d) penetrating in a front-rear direction and disposed radially outside the fixed recessed portion (901, 93d) when seen in an axial direction with the centre of the fixed recessed portion (901, 93d) considered as an axis, and a sound absorbing member (21, 7d) extending at least between a rear surface of the cover body (20, 6d) and a front surface of the sound source member (90, 90d); and
a fixing member (3, 51, 91d) that is fixed in the fixed recessed portion (901, 93d) for mounting the soundproofing cover (2, 5d) on the sound source member (90, 90d), the soundproofing device (1) **characterized in that**
the soundproofing device (1) further includes a ring member (4, 50, 98d) which comes into contact with a top surface of the boss (900, 92d) and extends radially outside the through hole (201, 60d) of the cover body (20, 6d),
at least part of the boss (900, 92d) is inserted into the through hole (201, 60d) of the cover body (20, 6d), and
the sound absorbing member (21, 7d) extends from the rear surface of the cover body (20, 6d) through the through hole (201, 60d) of the cover body (20, 6d) to the front surface of the cover body (20, 6d) and, seen in the axial direction, includes a radial direction floating portion (210) extending between an inner circumferential surface of the through hole (201, 60d) of the cover body (20, 6d) and an outer circumferential surface of the boss (900, 92d) and an axial direction floating portion (211) extending between an area surrounding the through hole (201, 60d) in the front surface of the cover body (20, 6d) and a rear surface of the ring member (4, 50, 98d), and
the radial direction floating portion (210) and the axial direction floating portion (211) are a part of the sound absorbing member (21, 7d).

2. The soundproofing device (1) according to claim 1, wherein the top surface of the boss (900, 92d) is surrounded from outside in the radial direction with a chamfered portion (212a) in which the sound absorbing member (21, 7d) is not disposed.

3. The soundproofing device (1) according to claim 1 or 2, wherein the cover body (20, 6d) has a mounting recessed portion (200) recessed in the rear surface thereof and the through hole (201, 60d) is disposed in a bottom wall of the mounting recessed portion (200).

4. The soundproofing device (1) according to any one of claims 1 to 3, wherein the fixing member (3, 51, 91d) is a bolt (3) that is inserted into the fixed recessed portion (901, 93d) and
the ring member (4, 50, 98d) is a washer (4) that is provided around the bolt (3) and caught between a rear surface of a head (30) of the bolt (3) and the top surface of the boss (900, 92d).

5. The soundproofing device (1) according to any one of claims 1 to 4, wherein the fixing member (3, 51, 91d) and the ring member (4, 50, 98d) are integrated.

6. The soundproofing device (1) according to any one of claims 1 to 5, wherein the soundproofing cover (2, 5d) is a foam moulded article including an annular groove (701 d), and a functional surface (702d) which is disposed inside the annular groove (701 d) and comes into contact with the rear surface of the ring member (4, 50, 98d) and in which generation of a underfilled portion (700d) is suppressed in comparison with an area outside the annular groove (701d).

7. The soundproofing device (1) according to any one of claims 1 to 6, wherein the protrusion amount of the boss (900, 92d) from the upper end of the through hole (201, 60d) of the cover body (20, 6d) is zero or more.

8. The soundproofing device (1) according to any one of claims 1 to 7, wherein the cover body (20, 6d) is rigid.

9. A foam moulding method for producing the soundproofing cover (5d) for the soundproofing device (1) according to any one of claims to 6 by foaming a foamed resin material (Ld) in a cavity (4d) of a foam moulding die (1d), the foam moulding method **characterized in that**
the soundproofing cover (5d) includes a functional surface (702d) which comes into contact with the rear surface of the ring member (98d),
the cavity (4d) has a functional surface moulding portion (401d) for moulding the functional surface (702d), and a gas accumulation portion (400d) into which gas (Ad) in the cavity (4d) is forced by a flow of the foamed resin material (Ld),
a gas flow control bump (200d, 202d) is disposed on a moulding surface defining the cavity (4d) in the foam moulding die (1d) to separate the functional surface moulding portion (401 d) and the gas accumulation portion (400d), and
the gas flow control bump (200d, 202d) prevents the gas (Ad) forced into the gas accumulation portion (400d) from flowing over the gas flow control bump (200d, 202d) into the functional surface moulding portion (401 d).

10. A foam moulding die (1d) for producing the soundproofing cover (5d) for the soundproofing device (1) according to any one of claims 1 to 6 by foaming a foamed resin material (Ld) in a cavity (4d) defined by a moulding surface, the foam moulding die **characterized in that**
the soundproofing cover (5d) includes a functional surface (702d) which comes into contact with the rear surface of the ring member (98d),
the cavity (4d) has a functional surface moulding portion (401 d) for moulding the functional surface (702d) and a gas accumulation portion (400d) into which gas (Ad) in the cavity (4d) is forced by a flow of the foamed resin material (Ld),
a gas flow control bump (200d, 202d) is disposed on the moulding surface to separate the functional surface moulding portion (401d) and the gas accumulation portion (400d), and
the gas flow control bump (200d, 202d) prevents the gas (Ad) forced into the gas accumulation portion (400d) from flowing over the gas flow control bump (200d, 202d) into the functional surface moulding portion (401 d).

## Patentansprüche

1. Schallschutzvorrichtung (1), die auf einer Oberfläche eines Schallquellenelements (90, 90d), von dem ein Vorsprung (900, 92d) mit einem festen Aussparungsbereich (901, 93d) auf einer oberen Oberfläche desselben so angeordnet ist, dass er vorsteht, angeordnet ist, und die aufweist:
eine Schallschutzabdeckung (2, 5d), die einen starren Abdeckungskörper (20, 6d), der ein Durchgangsloch (201, 60d) beinhaltet, das ihn in einer von vorne nach hinten verlaufenden Richtung durchdringt, und der radial außerhalb des festen Aussparungsbereichs (901, 93d) angeordnet ist, wenn er in einer axialen Richtung mit dem als eine Achse betrachteten Mittelpunkt des festen Aussparungsbereichs (802, 93d) betrachtet wird, und ein Schalldämpfungselement (21, 7d) aufweist, das sich zumindest zwischen einer hinteren Oberfläche des Abdeckungskörpers (20, 6d) und einer vorderen Oberfläche des Schallquellenelements (90, 90d) erstreckt; und
ein Befestigungselement (3, 51, 91d), das in dem festen Aussparungsbereich (901, 93d) zum Befestigen der Schallschutzabdeckung (2, 5d) auf dem Schallquellenelement (90, 90d) befestigt ist, wobei die Schallschutzvorrichtung (1) **dadurch gekennzeichnet ist, dass**
die Schallschutzvorrichtung (1) ferner ein Ringelement (4, 50, 98d) beinhaltet, das mit einer oberen Oberfläche des Vorsprungs (900, 92d) in Kontakt gelangt und sich radial außerhalb des Durchgangsloch (201, 60d) des Abdeckungskörpers (20, 6d) erstreckt,
zumindest ein Teil des Vorsprungs (900, 92d) in das Durchgangsloch (201, 60d) des Abdeckungskörpers (20, 6d) eingefügt ist, und
das Schalldämpfungselement (21, 7d) sich von der hinteren Oberfläche des Abdeckungskörpers (20, 6d) durch das Durchgangsloch (201, 60d) des Abdeckungskörpers (20, 6d) zu der vorderen Oberfläche des Abdeckungskörpers (20, 6d) erstreckt, und, wenn es in der axialen Richtung betrachtet wird, einen in radialer Richtung schwebenden Bereich (210), der sich zwischen einer inneren Umfangsoberfläche des Durchgangslochs (201, 60d) des Abdeckungskörpers (20, 6d) und einer äußeren Umfangsoberfläche des Vorsprungs (900, 92d) erstreckt, und einen in axialer Richtung schwebenden Bereich (211) beinhaltet, der sich zwischen einem Bereich, der das Durchgangsloch (201, 60d) in der vorderen Oberfläche des Abdeckungskörpers (20, 6d) umgibt, und einer hinteren Oberfläche des Ringelements (4, 50, 98d) erstreckt, und
der in radialer Richtung schwebende Bereich (210) und der in axialer Richtung schwebende Bereich (211) Teil des Schalldämpfungselements (21, 7d) sind.

2. Schallschutzvorrichtung (1) nach Anspruch 1, wobei die obere Oberfläche des Vorsprungs (900, 92d) von außen in der radialen Richtung von einem abgeschrägten Bereich (212a) umgeben ist, in dem das Schalldämpfungselement (21, 7d) nicht angeordnet ist.

3. Schallschutzvorrichtung (1) nach Anspruch 1 oder 2, wobei der Abdeckungskörper (20, 6d) einen Befestigungsaussparungsbereich (200) aufweist, der in der hinteren Oberfläche desselben ausgespart ist, und das Durchgangsloch (201, 60d) in einer unteren Wandung des Befestigungsaussparungsbereichs (200) angeordnet ist.

4. Schallschutzvorrichtung (1) nach einem der Ansprüche 1 bis 3, wobei das Befestigungselement (3, 51, 91d) eine Schraube (3) ist, die in den festen Aussparungsbereich (901, 93d) eingefügt ist, und
das Ringelement (4, 50, 98d) ein Unterlegblech (4) ist, das um die Schraube (3) herum angeordnet ist und zwischen einer hinteren Oberfläche eines Kopfes (30) der Schraube (3) und der oberen Oberfläche des Vorsprungs (900, 92d) festsitzt.

5. Schallschutzvorrichtung (1) nach einem der Ansprüche 1 bis 4, wobei das Befestigungselement (3, 51, 91d) und das Ringelement (4, 50, 98d) integriert sind.

6. Schallschutzvorrichtung (1) nach einem der Ansprüche 1 bis 5, wobei die Schallschutzabdeckung (2, 5d) ein Schaumformartikel ist, der eine kreisförmige Aussparung (701 d) und eine funktionelle Oberfläche (702d) beinhaltet, die im Inneren der kreisförmigen Aussparung (701 d) angeordnet ist und mit der hinteren Oberfläche des kreisförmigen Elements (4, 50, 98d) in Kontakt gelangt, und bei der die Entstehung eines unterfüllten Bereichs (700d) im Vergleich zu einem Bereich außerhalb der kreisförmigen Aussparung (701 d) verhindert wird.

7. Schallschutzvorrichtung (1) nach einem der Ansprüche 1 bis 6, wobei der Erhebungsbetrag des Vorsprungs (900, 92d) von dem oberen Ende des Durchgangslochs (201, 60d) des Abdeckungskörpers (20, 6d) null oder mehr beträgt.

8. Schallschutzvorrichtung (1) nach einem der Ansprüche 1 bis 7, wobei der Abdeckungskörper (20, 6d) starr ist.

9. Formschäumverfahren zum Herstellen einer Schallschutzabdeckung (5d) für die Schallschutzvorrichtung (1) nach einem der Ansprüche 1 bis 6 durch Schäumen eines geschäumten Harzmaterials (Ld) in einem Hohlraum (4d) einer Schaumformgebungsvorrichtung (1d), wobei das Formschäumverfahren **dadurch gekennzeichnet ist, dass**
die Schallschutzabdeckung (5d) einen funktionelle Oberfläche (702d) beinhaltet, die mit der hinteren Oberfläche des Ringelements (98d) in Kontakt gelangt,
der Hohlraum (4d) einen Formbereich (401d) einer funktionellen Oberfläche zum Formen der funktionellen Oberfläche (702d) und einen Gasansammlungsbereich (400d) aufweist, in den das Gas (Ad) in den Hohlraum (4d) durch eine Strömung des geschäumten Harzmaterials (Ld) gedrängt wird,
eine Gasströmungs-Steuerungserhebung (200d, 202d) auf einer Formoberfläche angeordnet ist, die den Hohlraum (4d) in der Schaumformgebungsvorrichtung (1d) definiert, um den Formbereich (401d) einer funktionellen Oberfläche und den Gasansammlungsbereich (400d) voneinander zu trennen, und
der Gasströmungs-Steuerungserhebung (200d, 202d) verhindert, dass das in den Gasansammlungsbereich (400d) gedrängte Gas (Ad) über die Gasströmungs-Steuerungserhebung (200d, 202d) in den Formbereich (401d) einer funktionellen Oberfläche strömt.

10. Schaumformgebungsvorrichtung (1d) zum Herstellen der Schallschutzabdeckung (5d) für die Schallschutzvorrichtung (1) nach einem der Ansprüche 1 bis 6 durch Schäumen eines geschäumten Harzmaterials (Ld) in einem Hohlraum (4d), der durch eine Formoberfläche definiert ist, wobei die Schaumformgebungsvorrichtung **dadurch gekennzeichnet ist, dass**
die Schallschutzabdeckung (5d) eine funktionelle Oberfläche (702d) beinhaltet, die mit der hinteren Oberfläche des Ringelements (98d) in Kontakt gelangt,
der Hohlraum (4d) einen Formbereich (401d) einer funktionellen Oberfläche zum Formen der funktionellen Oberfläche (702d) und einen Gasansammlungsbereich (400d), in den das Gas (Ad) in den Hohlraum (4d) durch eine Strömung des geschäumten Harzmaterials (Ld) gedrängt wird, aufweist,
eine Gasströmungs-Steuerungserhebung (200d, 202d), auf der Formoberfläche angeordnet ist, um den Formbereich (401d) einer funktionellen Oberfläche und den Gasansammlungsbereich (400d) voneinander zu trennen, und
die Gasströmungs-Steuerungserhebung (200d, 202d) verhindert, dass das in den Gasansammlungsbereich (400d) gezogene Gas über die Gasströmungs-Steuerungserhebung (200d, 202d) in den Formbereich (401d) einer funktionellen Oberfläche strömt.

## Revendications

1. Dispositif d'insonorisation (1) qui est disposé sur une surface d'un organe de source sonore (90, 90d) duquel un bossage (900, 92d) comportant une portion encastrée fixe (901, 93d) sur une surface supérieure de celui-ci est fourni afin de faire saillie, et qui comprend :
un capot d'insonorisation (2, 5d) qui comporte un corps de capot rigide (20, 6d) comprenant un trou traversant (201, 60d) pénétrant dans une direction avant-arrière et disposé radialement à l'extérieur de la portion encastrée fixe (901, 93d) lorsqu'il est vu dans une direction axiale avec le centre de la portion encastrée fixe (901, 93d) considéré comme un axe, et un organe absorbant le son (21, 7d) s'étendant au moins entre une surface arrière du corps de capot (20, 6d) et une surface avant de l'organe de source sonore (90, 90d) ; et
un organe de fixation (3, 51, 91d) qui est fixé dans la portion encastrée fixe (901, 93d) pour permettre le montage du capot d'insonorisation (2, 5d) sur l'organe de source sonore (90, 90d), le dispositif d'insonorisation (1) étant **caractérisé en ce que**
le dispositif d'insonorisation (1) comprend en outre un organe d'anneau (4, 50, 98d) qui vient en contact avec une surface supérieure du bossage (900, 92d) et s'étend radialement à l'extérieur du trou traversant (201, 60d) du corps de capot (20, 6d),
au moins une partie du bossage (900, 92d) est insérée dans le trou traversant (201, 60d) du corps de capot (20, 6d), et
l'organe absorbant le son (21, 7d) s'étend de la surface arrière du corps de capot (20, 6d) à travers le trou traversant (201, 60d) du corps de capot (20, 6d) à la surface avant du corps de capot (20, 6d) et, lorsqu'il est vu dans la direction axiale, comprend une portion de flottement de direction radiale (210) s'étendant entre une surface circonférentielle interne du trou traversant (201, 60d) du corps de capot (20, 6d) et une surface circonférentielle externe du bossage (900, 92d) et une portion de flottement de direction axiale (211) s'étendant entre une zone entourant le trou traversant (201, 60d) dans la surface avant du corps de capot (20, 6d) et une surface arrière de l'organe d'anneau (4, 50, 98d), et
la portion de flottement de direction radiale (210) et la portion de flottement de direction axiale (211) forment une partie de l'organe absorbant le son (21, 7d).

2. Dispositif d'insonorisation (1) selon la revendication 1, dans lequel la surface supérieure du bossage (900, 92d) est entourée depuis l'extérieur dans la direction radiale par une portion chanfreinée (212a) dans laquelle l'organe absorbant le son (21, 7d) n'est pas disposé.

3. Dispositif d'insonorisation (1) selon la revendication 1 ou 2, dans lequel le corps de capot (20, 6d) comporte une portion encastrée de montage (200) encastrée dans la surface arrière de celui-ci et le trou traversant (201, 60d) est disposé dans une paroi inférieure de la portion encastrée de montage (200).

4. Dispositif d'insonorisation (1) selon l'une quelconque des revendications 1 à 3, dans lequel l'organe de fixation (3, 51, 91d) est un boulon (3) qui est inséré dans la portion encastrée fixe (901, 93d) et
l'organe d'anneau (4, 50, 98d) est une rondelle (4) qui est disposée autour du boulon (3) et prise entre une surface arrière d'une tête (30) du boulon (3) et la surface supérieure du bossage (900, 92d).

5. Dispositif d'insonorisation (1) selon l'une quelconque des revendications 1 à 4, dans lequel l'organe de fixation (3, 51, 91d) et l'organe d'anneau (4, 50, 98d) sont intégrés.

6. Dispositif d'insonorisation (1) selon l'une quelconque des revendications 1 à 5, dans lequel le capot d'insonorisation (2, 5d) est un article moulé en mousse comprenant une gorge annulaire (701d), et une surface fonctionnelle (702d) qui est disposée à l'intérieur de la gorge annulaire (701d) et vient en contact avec la surface arrière de l'organe d'anneau (4, 50, 98d) et dans laquelle la génération d'une portion insuffisamment remplie (700d) est supprimée en comparaison avec une zone à l'extérieur de la gorge annulaire (701d).

7. Dispositif d'insonorisation (1) selon l'une quelconque des revendications 1 à 6, dans lequel la quantité de protubérance du bossage (900, 92d) depuis l'extrémité supérieure du trou traversant (201, 60d) du corps de capot (20, 6d) est de zéro ou plus.

8. Dispositif d'insonorisation (1) selon l'une quelconque des revendications 1 à 7, dans lequel le corps de capot (20, 6d) est rigide.

9. Procédé de moulage de mousse permettant de produire le capot d'insonorisation (5d) pour le dispositif d'insonorisation (1) selon l'une quelconque des revendications 1 à 6 en moussant un matériau en mousse de résine (Ld) dans une cavité (4d) d'une filière de moulage de mousse (1d), le procédé de moulage de mousse étant **caractérisé en ce que**
le capot d'insonorisation (5d) comprend une surface fonctionnelle (702d) qui vient en contact avec la surface arrière de l'organe d'anneau (98d),
la cavité (4d) comporte une portion de moulage de surface fonctionnelle (401d) permettant de mouler la surface fonctionnelle (702d), et une portion d'accumulation de gaz (400d) dans laquelle un gaz (Ad) dans la cavité (4d) est entré par force par un flux du matériau en mousse de résine (Ld),
une bosse de régulation de flux de gaz (200d, 202d) est disposée sur une surface de moulage définissant la cavité (4d) dans la filière de moulage de mousse (1d) afin de séparer la portion de moulage de surface fonctionnelle (401d) et la portion d'accumulation de gaz (400d), et
la bosse de régulation de flux de gaz (200d, 202d) empêche le gaz (Ad) entré par force dans la portion d'accumulation de gaz (400d) de s'écouler par-dessus la bosse de régulation de flux de gaz (200d, 202d) dans la portion de moulage de surface fonctionnelle (401d).

10. Filière de moulage de mousse (1d) permettant de produire le capot d'insonorisation (5d) pour le dispositif d'insonorisation (1) selon l'une quelconque des revendications 1 à 6 en moussant un matériau en mousse de résine (Ld) dans une cavité (4d) définie par une surface de moulage, la filière de moulage de mousse étant **caractérisée en ce que**
le capot d'insonorisation (5d) comprend une surface fonctionnelle (702d) qui vient en contact avec la surface arrière de l'organe d'anneau (98d),
la cavité (4d) comporte une portion de moulage de surface fonctionnelle (401d) permettant de mouler la surface fonctionnelle (702d) et une portion d'accumulation de gaz (400d) dans laquelle un gaz (Ad) dans la cavité (4d) est entré par force par un flux du matériau en mousse de résine (Ld),
une bosse de régulation de flux de gaz (200d, 202d) est disposée sur la surface de moulage afin de séparer la portion de moulage de surface fonctionnelle (401d) et la portion d'accumulation de gaz (400d), et
la bosse de régulation de flux de gaz (200d, 202d) empêche le gaz (Ad) entré par force dans la portion d'accumulation de gaz (400d) de s'écouler par-dessus de la bosse de régulation de flux de gaz (200d, 202d) dans la portion de moulage de surface fonctionnelle (401d).
